(19) Europäisches Patentamt
European Patent Office
Office européen des brevets

(11) **EP 4 363 813 B1**

(12) **EUROPÄISCHE PATENTSCHRIFT**

(45) Veröffentlichungstag und Bekanntmachung des Hinweises auf die Patenterteilung:
**25.03.2026 Patentblatt 2026/13**

(21) Anmeldenummer: **22737488.1**

(22) Anmeldetag: **30.06.2022**

(51) Internationale Patentklassifikation (IPC):
*G01J 3/02* (2006.01)   *G01J 3/28* (2006.01)
*G01J 3/45* (2006.01)   *G01J 3/453* (2006.01)

(52) Gemeinsame Patentklassifikation (CPC):
**G01J 3/4535; G01J 3/021; G01J 3/28;**
G01J 2003/4538

(86) Internationale Anmeldenummer:
**PCT/EP2022/068176**

(87) Internationale Veröffentlichungsnummer:
**WO 2023/275309 (05.01.2023 Gazette 2023/01)**

(54) **FT-SPEKTROMETER-ANORDNUNG MIT ZUSATZDETEKTOR ZUR KALIBRIERUNG DER FREQUENZACHSE UND ZUGEHÖRIGES MESSVERFAHREN**

FT SPECTROMETER ASSEMBLY HAVING ADDITIONAL DETECTOR FOR CALIBRATION OF THE FREQUENCY AXIS AND ASSOCIATED MEASURING METHOD

ENSEMBLE SPECTROMÈTRE À TRANSFORMÉE DE FOURIER À DÉTECTEUR SUPPLÉMENTAIRE POUR L'ÉTALONNAGE DE L'AXE DES FRÉQUENCES ET PROCÉDÉ DE MESURE ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.07.2021 DE 102021206973**

(43) Veröffentlichungstag der Anmeldung:
**08.05.2024 Patentblatt 2024/19**

(73) Patentinhaber: **Bruker Optics GmbH & Co. KG 76275 Ettlingen (DE)**

(72) Erfinder:
• **HARIG, Roland 76337 Waldbronn (DE)**
• **SIMON, Arno 76139 Karlsruhe (DE)**

(74) Vertreter: **Kohler Schmid Möbus Patentanwälte Partnerschaftsgesellschaft mbB Gropiusplatz 10 70563 Stuttgart (DE)**

(56) Entgegenhaltungen:
**EP-A1- 1 756 536       EP-A1- 3 413 021**
**WO-A1-2011/154035   US-A1- 2003 189 709**
**US-A1- 2019 017 930   US-A1- 2019 301 939**
**US-A1- 2020 217 786**

**Beschreibung**

Die Erfindung betrifft eine FT-Spektrometer-Anordnung, umfassend

- eine Lichtquelle für Licht,
- ein Interferometer mit wenigstens einem Strahlteiler und zwei Interferometerarmen, durch das das Licht der Lichtquelle geleitet wird, wobei die Interferometerarme jeweils einen Reflektor aufweisen,
- eine Messprobe an einer Messposition,
- einen Detektor für das Licht, wobei die Messposition im Strahlengang des Lichts zwischen dem Interferometer und dem Detektor angeordnet ist,
- einer Vorrichtung zur Veränderung eines optischen Gangunterschieds zwischen den zwei Interferometerarmen, insbesondere zum Verfahren eines oder beider der Reflektoren,
- einem Referenz-Laser, mit dem Referenz-Laserlicht durch das Interferometer geleitet wird, und
- wenigstens einen Referenz-Detektor zum Vermessen des Referenz-Laserlichts, wobei der Referenz-Detektor im Strahlengang des Referenz-Laserlichts hinter dem Interferometer angeordnet ist,

  wobei weiterhin ein Zusatz-Detektor vorgesehen ist, mit welchem ein Teilstrahl des Lichts vermessbar ist, welcher das Interferometer passiert hat, nicht aber die Messposition passiert hat,
  wobei mit dem Detektor ein weiterer Teilstrahl des Lichts, welcher das Interferometer passiert hat und die Messposition passiert hat, zeitgleich mit einer Vermessung des Teilstrahls am Zusatz-Detektor vermessbar ist.

Eine solche FT-Spektrometer-Anordnung ist aus der US 2019/017930 A1 bekannt geworden.

Bei der FT(=Fouriertransformations)-Spektroskopie wird breitbandiges Licht, beispielsweise Infrarot(=IR)-Licht, in einem Interferometer in zwei Teilstrahlen aufgespalten und ein Gangunterschied zwischen den Teilstrahlen aufgeprägt, und anschließend ein Detektor ausgelesen, auf den die überlagerten Teilstrahlen nach Wechselwirkung mit einer zu untersuchenden Messprobe fallen. Das Auslesen des Detektors wird für verschiedene Gangunterschiede wiederholt ("Abtastpunkte"). Bei der Überlagerung der Teilstrahlen kommt es zu Interferenzen, die abhängig vom Gangunterschied und von der Frequenz des Lichts zur Reduzierung oder Erhöhung der Bestrahlungsstärke auf dem Detektor führen. Die vom Gangunterschied abhängigen Intensitätsdaten des Detektors werden in Kombination mit anderen Datenverarbeitungsschritten einer Fouriertransformation unterzogen, wodurch ein Spektrum der untersuchten Messprobe erhalten wird.

Für die Messungen ist es wichtig, den Gangunterschied der Teilstrahlen an den Abtastpunkten genau vorgeben zu können oder zu kennen. Zu diesem Zweck ist es bekannt, neben dem typischerweise breitbandigen Licht für die eigentliche Messung der Messprobe zusätzlich einen Referenzlaser einzusetzen, dessen schmalbandiges Referenz-Laserlicht ebenfalls das Interferometer passiert, und aus dessen konstruktiver und destruktiver Interferenz an einem Referenz-Detektor (auch als Abtastdetektor bezeichnet) den Gangunterschied der Interferometerarme zu ermitteln.

Um den Gangunterschied korrekt zu ermitteln, ist es vorteilhaft, die Laserwellenlänge des Referenz-Lasers genau zu kennen.

Als Referenzlaser wurden lange Zeit He-Ne(=Helium-Neon)-Laser eingesetzt, die Laserlicht mit einer sehr stabilen, bekannten Laserwellenlänge emittieren. HeNe-Laser haben allerdings eine vergleichsweise große Bauform und sind aufgrund ihrer begrenzten Lebensdauer teuer im Betrieb.

Laserdioden hingegen sind langlebiger und weisen einen kompakten Bau auf. Allerdings weisen Laserdioden eine deutlich schlechtere Wellenlängenstabilität als HeNe-Laser auf. Insbesondere verändern Laserdioden die Laserwellenlänge abhängig von der Betriebstemperatur und vom Betriebsstrom, und auch durch Alterung.

Aus der DE 10 2004 025 448 A1 ist es bekannt geworden, bei einem FTIR-Spektrometer mit einer Laserdiode vom Typ VCSEL als Referenzlaser eine Wellenlängendrift aufgrund schwankender Temperaturen zuzulassen, und über eine Messung der Temperatur eine Korrektur des Spektrums vorzunehmen.

Aus der DE 10 2014 226 487 A1 ist ein FTIR-Spektrometer bekannt geworden, bei dem von der Referenzlaserquelle ausgehenden Lichtes durch ein Absorptionsmedium auf einen Referenzdetektor geleitet wird, und mit einer Elektronik die Laserwellenlänge des Referenzlasers auf die Absorptionslinie des Absorptionsmediums über das bekannte Betriebsverhalten des FTIR-Spektrometers mittels eines Signals des Referenzdetektors einzuregeln.

Durch die obigen Maßnahmen kann eine Wellenlängendrift des Referenzlasers weitgehend kompensiert werden oder eine deutliche Verbesserung der Wellenlängenstabilität des Referenzlasers erreicht werden.

Neben einer Instabilität der Wellenlänge des Referenzlasers als solches gibt es noch weitere Umstände, die zu einer Verfälschung des Spektrums der Messprobe führen können, beispielsweise ein schräger Einfall des Referenz-Laserlichts in das Interferometer. Gegenüber dem paraxialen Einfall ergibt sich in diesem Fall ein kleinerer optischer Gangunterschied im Interferometer, was zum gleichen Referenzsignal führt wie paraxial einfallendes Referenzlaserlicht einer größeren Wellenlänge. Bei schrägem Einfall wird die Frequenzachse des Spektrums daher wie bei einer Drift der Wellenlänge des Referenz-Lasers verstimmt.

Aus der der DE 10 2004 025 448 A1 ist es weiterhin bekannt, dass das Betriebsverhalten des FTIR-Spektrometers gelegentlich anhand einer Referenzprobe mit einem bekannten Spektrum bestimmt wird.

Die Durchführung von Messungen an der Referenzprobe führt jedoch grundsätzlich zu einer Unterbrechung des Messbetriebs.

Aus der US 5 309 217 A ist ein FTIR-Spektrometer bekannt, bei dem zwei Retroreflektoren an um 180° versetzen Armen eines Doppelpendels angeordnet sind.

Die US 2019/017930 A1 beschreibt ein Spektrometer-System, bei dem hinter einem Interferometer Infrarotlicht fokussiert wird. Im Fokus ist eine Jacquinot-Blende angeordnet, mit der ein Teil des Infrarotlichts auf einen Zusatzdetektor gelenkt wird, und ein anderer Teil der Infrarotstrahlung passiert die Jaquinot-Blende, passiert weiterhin eine Messprobe und wird an einem Infrarotdetektor detektiert.

Aus der US 2003/189709 A1 ist ein Infrarotspektrometer mit einem Interferometer umfassend zwei Retroreflektoren bekannt geworden. Als Referenz-Laser wird ein VCSEL-Laser verwendet.

Die US 2020/217786 A1 beschreibt ein FTIR-Spektrometer, bei welchem mit Messproben Messaufnahmen gemacht werden, wobei die Frequenzachse mit einem Kalibrierfaktor kalibriert wird. Der Kalibrierfaktor wird mit separaten Kalibriermessungen mit Luft als Probe durchgeführt.

Die EP 3 413 021 A1 beschreibt ein Verfahren zur Messung eines Spektrums unter Verwendung eines FTIR-Spektrometers. Eine Messung mit einer Referenzprobe zur Bestimmung einer Wellenlängenverschiebung findet vor einer Messung mit einer Messprobe statt.

Aus der US 2019/301939 A1 ist es ein FTIR-Spektrometer bekannt geworden, bei dem im Strahlengang hinter einem Interferometer ein Strahlteiler angeordnet ist, mit dem das IR-Licht aufgespalten werden kann, so dass ein erster Teil über eine Messprobe zu einem Detektor geleitet werden kann, und ein zweiter Teil über eine Referenzprobe zu einem weiteren Detektor geleitet werden kann.

Die WO 2011/154035 A1 beschreibt ein Spektrometer für den UV- und IR-Bereich. In einer ersten Ausführungsform wird Licht aus einer Strahlungsquelle teilweise durch eine Messprobe und teilweise durch ein Faser-Bragg-Gitter geleitet, und beide Teile werden einem Interferometer zugeführt; hinter dem Interferometer werden beide Teile mit einer Detektoranordnung vermessen. In einer zweiten Ausführungsform wird Licht aus einer Strahlungsquelle einem Monochromator zugeführt, und hinter dem Monochromator wird eine Teil der Strahlung über eine Messprobe einem ersten Detektor zugeführt, und ein weiterer Teil der Strahlung wird über ein Faser-Bragg-Gitter einem zweiten Detektor zugeführt.

Weiterhin sind ein FTIR-Spektroskopie-Verfahren und ein zugehöriges System aus der WO 2005/111560 A1 bekannt geworden.

Aufgabe der Erfindung

Es ist Aufgabe der Erfindung, eine verbesserte FT-Spektrometer-Anordnung und ein zugehöriges Messverfahren zur Verfügung zu stellen, bei der bzw. mit dem auf einfache Weise eine hohe Messgenauigkeit bei hoher Verfügbarkeit der FT-Spektrometer-Anordnung erreichbar ist.

Beschreibung der Erfindung

Diese Aufgabe wird erfindungsgemäß gelöst durch eine FT-Spektrometer-Anordnung der eingangs genannten Art, die dadurch gekennzeichnet ist,

dass die Reflektoren als Retro-Reflektoren ausgebildet sind,
dass eine erste Blende im Strahlengang des Lichts zwischen der Lichtquelle und dem Interferometer, mit der ein Teil, insbesondere eine Hälfte, des Lichts abgeschattet wird, vorgesehen ist,
und dass der Teilstrahl des Lichts, welcher mit dem Zusatz-Detektor vermessbar ist, ausgehend vom Strahlteiler in Richtung zur Lichtquelle auf die erste Blende zurück gerichtet ist oder ausgehend vom Strahlteiler in Richtung zur Probenposition hin auf die zweite Blende zu gerichtet ist.

Die erfindungsgemäße FT-Spektrometer-Anordnung verfügt über zwei Detektoren, nämlich den Detektor zur Vermessung der Messprobe und einen Zusatz-Detektor. Letzterer dient dazu, eine Kalibrierinformation zu einer Kalibriersubstanz zu bestimmen, mit der das Spektrum der Messprobe korrigiert werden kann.

Mit dem Zusatz-Detektor und dem Detektor kann dabei zeitgleich eine Datenaufnahme erfolgen, insbesondere um zeitgleich Probeninformation am Detektor und Information für eine Kalibrierung am Zusatz-Detektor zu erfassen. Die Erfindung ermöglicht somit grundsätzlich eine Kalibrierung während der Vermessung einer Messprobe.

Im Strahlengang des Lichts zum Zusatz-Detektor ist die Messposition nicht enthalten, so dass die an der Messposition angeordnete Messprobe die Bestimmung der Kalibrierinformation in keiner Weise beeinträchtigt. Insbesondere ist es nicht nötig, eine Messprobe (bzw. Messsubstanz) von der Messposition zu entfernen, um die Kalibrierinformation zu gewinnen. Etwaige industrielle Produktionsprozesse, die kontinuierlich eine zu vermessende Substanz durch eine Durchflusszelle an der Messposition leiten, brauchen für die Gewinnung der Kalibrierinformation nicht unterbrochen zu werden. Umgekehrt kann eine gewünschte Kalibriersubstanz im Strahlengang des Lichts zwischen dem Interferometer und dem Zusatz-Detektor angeordnet werden, ohne dass dies die Messung der Messprobe stören würde. Insbesondere kann im Rahmen der Erfindung eingerichtet werden, dass zur Kalibrierung ausschließlich Strahlung genutzt wird, die die Messposition mit der Messprobe ohnehin nicht erreichen würde, so dass das Signal-RauschVerhältnis durch die gleichzeitige Messung mit dem Zusatz-Detektor nicht verschlechtert wird.

Die über den Zusatz-Detektor gewonnene Kalibrierinformation wird dazu genutzt, einen Kalibrierfaktor zu bestimmen, der bei der Bestimmung oder Kalibrierung von Spektren von Messproben angewandt werden kann, insbesondere zur Berechnung einer effektiven Laserwellenlänge des Referenz-Lasers (siehe dazu unten mehr).

Mit der ersten Blende werden Rückreflektionen von Licht, das von der Lichtquelle in das Interferometer eintritt, zurück zur Lichtquelle verhindert. Der Zusatz-Detektor vermisst Licht, das ohnehin nicht zur Position der Messprobe gelangen würde.

Für die Anbindung des Zusatz-Detektors wird in der Regel kein weiterer Strahlteiler (über einen Strahlteiler des Interferometers hinaus) oder dichroitischer Spiegel (Dichroit) benötigt. Für die Anbindung des Zusatz-Detektors werden zudem in der Regel keine beweglichen Teile benötigt; der Zusatz-Detektor ist in der Regel permanent im Messaufbau angebunden.

Die vermessenen Spektralbereiche von Detektor und Zusatz-Detektor können sich vollständig oder teilweise überlappen.

Für die Messaufnahmen am Detektor und die Kalibrieraufnahmen des Zusatz-Detektors kann im Wesentlichen der identische optische Aufbau genutzt werden.

An der Messposition können prinzipiell alle für konventionelle FT-Spektrometer bekannten Verfahren bzw. Messanordnungen, d.h. Anordnungen zur Probenbereitstellung, zur Probenbeleuchtung und zur Detektion der Strahlung, angewendet werden, z.B. kann eine Durchflusszelle für eine gasförmige oder flüssige Messprobe genutzt werden. Die Reflektoren der beiden Interferometerarme können insbesondere als Retro-Reflektoren (Würfeleckenspiegel) ausgebildet sein.

Im Rahmen der Beschreibung der vorliegenden Erfindung wird die zur Untersuchung der Messprobe genutzte elektromagnetische Strahlung unterschiedlicher Spektralbereiche einheitlich als "Licht" bezeichnet. Typischerweise wird UV-Licht, sichtbares Licht, Infrarotlicht oder längerwellige Strahlung bis zu Wellenlängen von 5 mm in Verbindung mit der vorliegenden Erfindung genutzt.

*Bevorzugte Ausführungsformen*

Bei einer bevorzugten Ausführungsform der erfindungsgemäßen FT-Spektrometer-Anordnung ist vorgesehen, dass eine zweite Blende im Strahlengang des Lichts zwischen dem Interferometer und der Messposition, mit der ein Teil, insbesondere eine Hälfte, des Lichts abgeschattet wird, vorgesehen ist. Das vom Zusatz-Detektor vermessene Licht würde von der zweiten Blende ohnehin abgeschattet bzw. würde zurück zur Lichtquelle gelangen (und von der ersten Blende abgeschattet werden), was besonders effizient ist.

Bevorzugt ist eine Ausführungsform, bei der in dem Teilstrahl des Lichts, welcher mit dem Zusatz-Detektor vermessbar ist, zwischen dem Interferometer und dem Zusatz-Detektor eine Fokussierlinse oder ein Fokussierspiegel angeordnet ist. Dadurch kann die Intensität von Licht, das am Zusatz-Detektor detektiert wird, erhöht werden.

Bevorzugt ist auch eine Ausführungsform, bei der in dem Teilstrahl des Lichts, welcher mit dem Zusatz-Detektor vermessbar ist, zwischen dem Interferometer und dem Zusatz-Detektor ein Behälter mit einer Kalibriersubstanz angeordnet ist. Dadurch kann eine beliebige Kalibriersubstanz in einer praktisch beliebigen Menge oder Konzentration für die Gewinnung der Kalibrierinformation eingesetzt werden, ohne dass dadurch die Vermessung einer Messprobe an der Messposition gestört würde. Insbesondere können so auf einfache Weise starke, mit großer Genauigkeit zu detektierende Absorptionslinien der Kalibriersubstanz im Zusatz-Spektrum erzeugt werden. Alternativ kann als Kalibriersubstanz auch eine im Strahlengang omnipräsente (ohnehin vorhandene) Substanz genutzt werden, beispielsweise durch Luftfeuchtigkeit vorhandener Wasserdampf.

Bevorzugt ist eine Weiterbildung dieser Ausführungsform, bei der die Kalibriersubstanz ein Kalibriergas, bevorzugt Wasserdampf oder Methan oder Acetylen, ist.

Diese Substanzen verfügen über leicht zu detektierende Absorptionslinien, die für eine Kalibrierung im Infrarot gut genutzt werden können, da die Linienpositionen (Wellenlängen) mit hoher Genauigkeit bekannt sind. So ist beispielsweise Wasser als atmosphärisches Molekül Gegenstand zahlreicher Untersuchungen und ein Übergang von Methan wird vom BIPM als Frequenzstandard genutzt. Zudem sind diese Substanzen kostengünstig verfügbar.

*Erfindungsgemäße Messverfahren*

In den Rahmen der vorliegenden Erfindung fällt weiterhin ein Verfahren zur Messung eines Spektrums einer Messprobe mittels einer FT-Spektrometer-Anordnung mit einer erfindungsgemäßen, oben beschriebenen FT-Spektrometer-Anordnung,

wobei die Messung eine oder mehrere Messaufnahmen umfasst,
wobei in einer jeweiligen Messaufnahme

- Licht aus einer Lichtquelle durch ein Interferometer geleitet wird, an einer Messposition hinter dem Interferometer mit der Messprobe wechselwirkt und an einem Detektor vermessen wird,
- weiterhin Referenz-Laserlicht aus einem Referenz-Laser, insbesondere einer Laserdiode, durch das Interferometer geleitet wird und an wenigstens einem Referenz-Detektor vermessen wird,

- wobei unter anderem ein Signal des Detektors der einen oder der mehreren Messaufnahmen und ein Kalibrierfaktor zur Kalibrierung einer Frequenzachse genutzt werden, um ein Spektrum der Messprobe zu erzeugen,

wobei die Messung eine oder mehrere Kalibrieraufnahmen umfasst,
wobei in einer jeweiligen Kalibrieraufnahme

- Licht aus der Lichtquelle durch das Interferometer geleitet wird, und aus dem Strahlengang des Lichts ein Teilstrahl des Lichts nach dem Passieren des Interferometers ohne Passieren der Messposition an einem Zusatz-Detektor vermessen wird,
- weiterhin Referenz-Laserlicht aus dem Referenz-Laser durch das Interferometer geleitet wird und an dem wenigstens einen Referenz-Detektor vermessen wird, wobei unter anderem ein Signal des Zusatz-Detektors der einen oder der mehreren Kalibrieraufnahmen dazu genutzt wird, um ein Zusatz-Spektrum zu erzeugen,

und wobei ein Referenz-Spektrum oder eine Teilinformation daraus einer Kalibriersubstanz, insbesondere eines Kalibriergases, welche im Strahlengang des Lichts zwischen der Lichtquelle und dem Zusatz-Detektor enthalten ist, mit dem Zusatz-Spektrum oder einer Teilinformation daraus verglichen wird, um den Kalibrierfaktor zu ermitteln.

Durch Vermessung des Teilstrahls des Lichts am Zusatz-Detektor im Rahmen der Kalibrieraufnahme(n) können Kalibrierinformationen für die eigentlichen Messaufnahme(n) an Messproben gewonnen werden. Eine Messprobe an der Messposition stört dabei die Kalibrieraufnahmen nicht. Während einer Kalibrieraufnahme braucht die Messposition also nicht "leer" zu sein; vielmehr kann eine Messprobe noch oder schon an der Messposition angeordnet sein, ohne die Kalibrieraufnahme zu behindern. Umgekehrt kann, falls gewünscht, eine Kalibriersubstanz zwischen Interferometer und Zusatz-Detektor angeordnet werden, ohne dass die Messaufnahmen gestört werden.

Mittels des Zusatz-Spektrums kann durch Vergleich mit dem Referenz-Spektrum ein Kalibrierfaktor ermittelt werden, mit dem ein Spektrum einer Messprobe bezüglich der Frequenzachse kalibriert werden kann. Die Kalibrierung mit dem erfindungsgemäß bestimmten Kalibrierfaktor kann grundsätzlich alle Quellen einer Verstimmung der Frequenzachse (Wellenlängenskala) des Spektrums einer Messprobe ausgleichen, insbesondere eine etwaige Wellenlängeninstabilität des Referenz-Lasers oder auch einen schrägen Einfall des Referenz-Laserstrahls in das Interferometer. Die Kalibrierung kann dabei so häufig wie gewünscht bzw. erforderlich erfolgen. Dabei wird die Verfügbarkeit der FT-Spektrometer-Apparatur durch Kalibrieraufnahmen praktisch nicht beeinträchtigt, da Messaufnahmen und Kalibrieraufnahmen grundsätzlich zeitgleich stattfinden können. Entsprechend ist im Rahmen der Erfindung im Allgemeinen vorgesehen, dass Messaufnahmen und Kalibrieraufnahmen zumindest über einen Teil des Betriebs der FT-Spektrometer-Anordnung gleichzeitig stattfinden.

Der Kalibrierfaktor, der hier auch mit S bezeichnet wird, kann in einer effektiven Laserfrequenz $F_{eff}$ des Referenz-Lasers enthalten sein, welche nach der Fouriertransformation zur Zuordnung der den Datenpunkten des Spektrums entsprechenden Frequenzen bzw. Wellenlängen (über die Auslesepositionen/Gangunterschiede) genutzt wird. Der Kalibrierfaktor S korreliert dann eine effektive Laserfrequenz $F_{eff}$ des Referenz-Lasers mit der (festen) nominellen Laserfrequenz $F_{no}$ des Referenz-Lasers über $F_{eff}=F_{no}*S$. Man beachte, dass der Kalibrierfaktor S kleiner 1 oder auch größer 1 sein kann. Als nominelle Laserfrequenz wird hier eine ungefähre Frequenzangabe bezeichnet, die z.B. ein Hersteller für eine Laserdiode angibt.

Man beachte, dass der Kalibrierfaktor S im Betrieb der FT-Spektrometer-Anordnung immer wieder aktualisiert wird, beispielsweise indem ein bisheriger Kalibrierfaktor $S_{alt}$ mit einem Update-Faktor UF multipliziert wird, also $S=UF*S_{alt}$. Ein mit einem bisherigen (veralteten) Kalibrierfaktor $S_{alt}$ erzeugtes Spektrum einer Messprobe kann dann zu einem kalibrierten Spektrum korrigiert werden, indem die Frequenzachse mit dem Update-Faktor UF korrigiert wird, oder es kann aus wenigstens einem Interferogramm (Rohdaten des Signals des Detektors) ein neues kalibriertes Spektrum direkt mit dem aktuellen Kalibrierfaktor S erzeugt werden.

Das Zusatz-Spektrum kann ein unkorrigiertes Zusatz-Spektrum sein (ohne Korrektur mit einem Kalibrierfaktor, bzw. Kalibrierfaktor "1", etwa indem der Fouriertransformation bei der Bestimmung der Gangunterschiede die nominelle Laserfrequenz $F_{no}$ zugrunde gelegt wird), oder ein mit einem (bisherigen) Kalibrierfaktor $S_{alt}$ korrigiertes Zusatz-Spektrum sein.

Für eine Messaufnahme oder Kalibrieraufnahme wird der optische Gangunterschied durch Bewegung eines oder beider Reflektoren, verändert ("Scan") und mitverfolgt, und der Detektor bzw. der Zusatz-Detektor werden jeweils bei bekannten Gangunterschieden ausgelesen. Je Messaufnahme oder Kalibrieraufnahme erfolgen grundsätzlich ein oder mehrere Durchgänge durch den zur Verfügung stehenden bzw. gewählten Bereich des optischen Gangunterschieds (Verfahrweg des oder der Reflektoren in den Interferometerarmen). Als Signal bzw. Daten des Detektors bzw. Zusatz-Detektors werden ein oder mehrere Interferogramme bzw. Zusatz-Interferogramme erhalten. Durch Fouriertransformation kann jeweils ein Spektrum bzw. Zusatz-Spektrum erhalten werden.

Das Auslesen des Detektors und des Zusatz-Detektors kann bei äquidistanten Gangunterschieden (etwa bestimmt durch die Nulldurchgänge des Wechselspannungsanteils des Signals des Detektors für das Referenz-Laserlicht) erfolgen (konventionelle Methode), kann aber auch zu äquidistanten Zeiten erfolgen (wobei die Gangunterschiede zu den Auslesezeitpunkten über die gemessene zeitabhängige Intensität des interferierenden Referenzlichts, ggf. über eine Interpolation, berechnet werden).

Das Referenz-Laserlicht ist näherungsweise monochromatisch. Der Referenz-Laser ist typischerweise als eine kostengünstige Laserdiode ausgebildet; eine besondere Frequenzstabilität ist grundsätzlich nicht erforderlich; es genügt, wenn die Frequenzstabilität für die Gültigkeitsdauer eines Kalibrierfaktors gegeben ist, die im Rahmen der Erfindung, wenn nötig, auf die Dauer einer Messaufnahme verkürzt werden kann.

*Bevorzugte Varianten des erfindungsgemäßen Messverfahrens*

Besonders bevorzugt ist eine Variante des erfindungsgemäßen Verfahrens, bei dem ein oder mehrere der Messaufnahmen und ein oder mehrere der Kalibrieraufnahmen als ein oder mehrere gemeinsame Aufnahmen zeitgleich durchgeführt werden. Während der gemeinsamen Aufnahmen werden die Durchgänge durch den zur Verfügung stehenden Verfahrweg der Interferometerarme sowohl für das Auslesen des Detektors als auch für das Auslesen des Zusatz-Detektors genutzt; somit bleibt die Interferometer-Anordnung während der Kalibrieraufnahmen auch für Messaufnahmen voll verfügbar.

Bevorzugt ist auch eine Weiterentwicklung dieser Variante, wobei alle Messaufnahmen und Kalibrieraufnahmen als gemeinsame Aufnahmen durchgeführt werden. Dadurch ist die Verfügbarkeit der FT-Spektrometer-Anordnung für den Messbetrieb maximal, und weiterhin kann die Kalibrierung quasi-kontinuierlich angepasst oder überprüft werden, was die Genauigkeit der gewonnen Spektren und der daraus gewonnenen Messergebnisse, z.B. Konzentrationen in einer Stoffmischung, maximiert.

Bei einer vorteilhaften Weiterentwicklung basieren das kalibrierte Spektrum der Messprobe und der Kalibrierfaktor, der bei der Erzeugung des kalibrierten Spektrums angewandt wird, auf einer oder mehreren gemeinsamen Aufnahmen. Mit anderen Worten, die eine oder die mehreren Kalibriermessungen zur Bestimmung des Kalibrierfaktors, welche zur Erzeugung des kalibrierten Spektrums der Messprobe eingesetzt werden, sind zeitgleich zu der einen oder den mehreren Messaufnahmen für dieses Spektrums, und beruhen also auf denselben Durchgängen durch den zur Verfügung stehenden Verfahrweg der Interferometerarme. Das Referenz-Laserlicht der Kalibrieraufnahmen und der Messaufnahmen, welches zur Bestimmung der zugrunde gelegten Gangunterschiede eingesetzt wird, ist dasselbe, so dass diesbezüglich keine Verstimmung vorliegen kann. Dadurch wird eine sehr hohe Kalibriergenauigkeit erreicht.

In einer alternativen Variante ist vorgesehen, dass der Kalibrierfaktor, der bei der Erzeugung des kalibrierten Spektrums der Messprobe angewandt wird, auf einer oder mehreren Kalibrieraufnahmen basiert, die zeitlich vor der einen oder den mehreren Messaufnahmen aufgenommen wurden, auf denen das kalibrierte Spektrum basiert. Dadurch kann die Erzeugung des kalibrierten Spektrums der Messprobe besonders schnell erfolgen. Für die Erzeugung des Spektrums oder dessen Korrektur mit dem Korrekturfaktor braucht nicht erst die Bestimmung des Korrekturfaktors aus aktuellen gemeinsamen Aufnahmen abgewartet zu werden, sondern es kann ein bereits berechneter Kalibrierfaktor genutzt werden.

*Varianten mit Messung von mehreren Spektren an mehreren Messproben*

Bevorzugt ist auch eine Variante, bei der im Rahmen des Verfahrens eine Messung von mehreren Spektren an mehreren Messproben erfolgt,
wobei jeweils ein kalibriertes Spektrum der jeweiligen Messprobe erzeugt wird. Im Rahmen dieser Variante erfolgt die Vermessung von mehreren (verschiedenen, neuen) Messproben zeitlich hintereinander. Als neue Messprobe gilt im Rahmen der Erfindung auch dieselbe Probensubstanz, wenn diese sich seit der letzten Messung verändert hat oder haben könnte, etwa eine andere Temperatur aufweist oder einen anderen Druck, oder einfach durch Zeitablauf chemische Veränderungen erfahren haben könnte. Verschiedene Messungen an einer Durchflusszelle, durch die kontinuierlich Probensubstanz durchgeleitet wird, gelten als an verschiedenen Messproben durchgeführt.

Bevorzugt wird für eine Messprobe während einer oder mehreren gemeinsamen Aufnahmen der aktuelle Kalibrierfaktor S anhand der einen oder mehreren Kalibrieraufnahmen bestimmt, und dieser sogleich zur Bestimmung des kalibrierten Spektrums aus der einen oder den mehreren, zeitgleich aufgenommenen Messaufnahmen der aktuellen Messprobe angewandt.

Es können alternativ auch während einer oder mehreren gemeinsamen Aufnahmen ein mit einem bisherigen Kalibrierfaktor $S_{alt}$ kalibriertes Spektrum der aktuellen Messprobe und eine Bestimmung eines neuen Kalibrierfaktors S für die nächste zu vermessende Messprobe erfolgen.

Im Rahmen dieser Variante ist es auch möglich, einen Kalibrierfaktor, der anhand einer oder mehrerer Kalibrieraufnahmen bestimmt wurde, für mehrere Messproben und die Erzeugung von deren jeweiligem kalibrierten Spektrum heranzuziehen.

Bevorzugt ist eine Weiterentwicklung dieser Variante, wobei für jedes kalibrierte Spektrum der mehreren Messproben ein eigener Kalibrierfaktor ermittelt wird, mit welchem das kalibrierte Spektrum einer jeweiligen Messprobe erzeugt wird. Dadurch ist eine besonders hohe Genauigkeit des Kalibrierfaktors möglich; der Kalibrierfaktor gilt nur für jeweils ein Spektrum (unbeschadet der Möglichkeit, dass der nächste Kalibrierfaktor zufällig mit dem vorhergehenden Kalibrierfaktor übereinstimmt).

In einer Untervariante dieser Weiterentwicklung, wobei ein oder mehrere der Messaufnahmen und ein oder mehrere der Kalibrieraufnahmen als ein oder mehrere gemeinsame Aufnahmen zeitgleich durchgeführt werden, ist vorgesehen, dass der jeweilige eigene Kalibrierfaktor und das jeweilige kalibrierte Spektrum der jeweiligen Messprobe auf gemeinsamen Aufnahmen basieren. Mit anderen Worten, die eine oder die mehreren Messaufnahmen zur Bestimmung des Kalibrierfaktors S für eine jeweilige Messprobe und die eine oder die mehreren Messaufnahmen dieser Messprobe, auf die der Kalibrierfaktor S angewandt wird, werden zeitgleich aufgenommen. Das Referenz-Laserlicht der Kalibrieraufnahme(n) und der Messaufnahme(n) bei einer jeweiligen Messprobe ist dasselbe, so dass diesbezüglich keine Verstimmung vorliegen kann. Dadurch wird eine besonders hohe Kalibriergenauigkeit erreicht.

Bei einer alternativen Weiterentwicklung ist vorgesehen, dass ein probenübergreifender Kalibrierfaktor, der auf Basis einer oder mehrerer Kalibrieraufnahmen ermittelt wird, für die Erzeugung mehrerer kalibrierter Spektren von mehreren Messproben angewandt wird. Dadurch kann die Erzeugung der kalibrierten Spektren der unterschiedlichen Messproben beschleunigt werden und der Rechenaufwand reduziert werden.

In einer Untervariante dieser Weiterentwicklung wird der probenübergreifende Kalibrierfaktor auf Basis einer oder mehrerer Kalibrieraufnahmen ermittelt, die eine höhere spektrale Auflösung aufweisen als zumindest ein Teil der Messaufnahmen, auf denen die mehreren kalibrierten Spektren der mehreren Messproben basieren. Dadurch kann die Kalibriergenauigkeit bei geringem Aufwand, insbesondere geringfügig längerer Messzeit während der Kalibrieraufnahme(n) mit höherer Auflösung, deutlich verbessert werden.

Eine andere, bevorzugte Untervariante sieht vor,

dass zumindest ein Teil der Messaufnahmen, auf denen jeweils ein kalibriertes Spektrum einer Messprobe basiert, das mit dem probenübergreifenden Kalibrierfaktor erzeugt wird, zusammen mit Monitoraufnahmen ausgeführt wird, wobei die Monitoraufnahmen Kalibrieraufnahmen entsprechen, mit denen ein Hilfs-Kalibrierfaktor ermittelt wird, und dass anhand eines Vergleichs zwischen dem Hilfs-Kalibrierfaktor und dem probenübergreifenden Kalibrierfaktor entschieden wird, ob

- der probenübergreifende Kalibrierfaktor noch brauchbar ist und/oder das jeweilige mit dem probenübergreifenden Kalibrierfaktor berechnete, kalibrierte Spektrum brauchbar ist, oder

- ein neuer probenübergreifender Kalibrierfaktor ermittelt werden muss und/oder das jeweilige mit dem probenübergreifenden Kalibrierfaktor berechnete, kalibrierte Spektrum verworfen werden muss. Durch dieses Vorgehen kann mit geringem Aufwand sichergestellt werden, dass der probenübergreifende Kalibrierfaktor bzw. ein darauf basierendes, kalibriertes Spektrum eine gewisse Mindestgenauigkeit einhält.

Falls ein neuer, probenübergreifende Kalibrierfaktor ermittelt werden muss, kann dies im Anschluss erfolgen, etwa mit einer oder mehreren Kalibrieraufnahmen erhöhter spektraler Auflösung, und zukünftig angewandt werden. Alternativ kann auch der Hilfs-Kalibrierfaktor zum nächsten probenübergreifenden Kalibrierfaktor erhoben werden und zukünftig angewandt werden.

Typischerweise ist ein Grenzwert oder Intervall einer absoluten oder relativen Abweichung des Hilfs-Kalibrierfaktors vom dem (bisherigen) probenübergreifendem Kalibrierfaktor definiert (abgespeichert), mit dem entschieden wird, ob der probenübergreifende Kalibrierfaktor noch brauchbar ist. Beispielsweise kann festgelegt sein, dass der Hilfs-Kalibrierfaktor um maximal 0,01% vom probenübergreifenden Kalibrierfaktor abweichen darf, um noch als brauchbar zu gelten.

Vorteilhaft ist eine Weiterentwicklung, wobei ein oder mehrere der Messaufnahmen und ein oder mehrere der Kalibrieraufnahmen als ein oder mehrere gemeinsame Aufnahmen zeitgleich durchgeführt werden, die vorsieht, dass die Messung mehrere Kalibrieraufnahmen umfasst, die gemeinsame Aufnahmen sind, und sich auf die mehreren Messproben verteilen,

dass ein gemitteltes Zusatz-Spektrum aus den Signalen des Zusatz-Detektors oder den Zusatz-Spektren, die zu diesen mehreren Kalibrieraufnahmen gehören, berechnet wird, und dass das Referenz-Spektrum oder eine Teilinformation daraus mit dem gemittelten Zusatz-Spektrum oder einer Teilinformation daraus verglichen wird, um den Kalibrierfaktor zu ermitteln, wobei dieser Kalibrierfaktor angewandt wird

- für die Erzeugung des kalibrierten Spektren der letzten Messprobe der Messproben, auf die sich die Kalibrieraufnahmen verteilen,
- und/oder für die Erzeugung eines kalibrierten Spektrums wenigstens einer nächsten Messprobe,

insbesondere wobei die mehreren Messproben eine vordefinierte Anzahl von jeweils zuletzt vermessenen Messproben umfasst.

Das (über die Vermessung mehrerer Messproben) gemittelte Zusatz-Spektrum weist in der Regel ein besseres S/N-Verhältnis auf als ein einzelnes (während der Vermessung einer einzelnen Messprobe aufgenommenes) Zusatz-Spektrum. Dadurch kann die Genauigkeit der Kalibrierung verbessert werden.

*Varianten zur Bestimmung des Kalibrierfaktors*

Bei einer bevorzugten Variante ist vorgesehen, dass der Vergleich des Referenz-Spektrums oder der Teilinformation daraus mit dem Zusatz-Spektrum oder der Teilinformation daraus erfolgt, indem eine Wellenzahl-Position $P_{ref}$ einer Absorptionslinie der Kalibriersubstanz im Referenz-Spektrum und eine entsprechende Wellenzahl-Position $P_{zus}$ der Absorptionslinie der Kalibriersubstanz im Zusatz-Spektrum bestimmt werden, insbesondere wobei der Kalibrierfaktor S ermittelt wird als $S=(P_{ref}/P_{zus})*S_{alt}$, mit $S_{alt}$: bei der Erzeugung des Zusatz-Spektrums angewandter bisheriger Kalibrierfaktor, wobei $S_{alt}=1$ falls bei der Erzeugung des Zusatz-Spektrums kein bisheriger Kalibrierfaktor angewandt wurde. Dieses Vorgehen ist besonders einfach. Falls im Zusatz-Spektrum eine Absorptionslinie ausreichender Stärke ohne nennenswerte Überlagerung zu anderen Absorptionslinien vorhanden ist, so dass die Wellenzahlposition $P_{ref}$ gut zu bestimmen ist, ist diese Variante besonders einfach. In der Regel kann durch Anbringung eines Behälters enthaltend eine geeignete Kalibriersubstanz im Strahlengang des Lichts zwischen Interferometer und Zusatz-Detektor eine geeignete Absorptionslinie sichergestellt werden. Im Rahmen dieser Variante kann beispielsweise eine absolute Differenz oder ein Quotient der Wellenzahlpositionen zur quantitativen Bestimmung des Kalibrierfaktors herangezogen werden. Wenn das Zusatz-Spektrum ein (mit einem bisherigen Korrekturfaktor $S_{alt}$) korrigiertes Zusatz-Spektrum ist, sollte (innerhalb der gewünschten Genauigkeit) die Differenz bei 0 oder der Quotient bei 1 liegen, wenn der (bisherige) Kalibrierfaktor korrekt sein soll. Typischerweise ist ein Intervall definiert, innerhalb dessen die Differenz oder der Quotient liegen muss, um die (bisherige) Kalibrierung als brauchbar zu bestätigen. Im Falle von $S_{alt}=1$ kann die nominelle Laserfrequenz $F_{no}$ bei der Erzeugung des Zusatz-Spektrums zugrunde gelegt werden; die nominelle Laserfrequenz $F_{no}$ definiert insoweit dann die Frequenzachse des Zusatz-Spektrums.

Vorteilhaft ist eine Variante, die vorsieht, dass der Vergleich des Referenz-Spektrums oder der Teilinformation daraus mit dem Zusatz-Spektrum oder einer Teilinformation daraus erfolgt, indem die Kreuzkorrelation eines ausgewählten Spektralbereichs des Referenz-Spektrums und eines entsprechenden Spektralbereichs des Zusatz-Spektrums berechnet wird, d.h. das Integral K1 mit

$$\int_{\sigma_0-\delta}^{\sigma_0+\delta} f(\sigma) * g(\sigma + \tau)d\sigma = K1(\tau)$$

berechnet wird, mit $\sigma_0$: mittlere Wellenzahl-Position eines charakteristischen Absorptionsbereichs der Kalibriersubstanz, $\delta$: Integrationsweite, $\sigma$: Wellenzahl, $\tau$: Wellenzahlverschiebungsvariable, f: Referenz-Spektrum; g: Zusatz-Spektrum, und für das Maximum von $K1(\tau)$ der zugehörige Wert $\tau0$ der Wellenzahlverschiebungsvariablen $\tau$ bestimmt wird, und der Kalibrierfaktor S zu $S=[(\sigma_0/(\sigma_0+\tau0)]*S_{alt}$ ermittelt wird, mit $S_{alt}$: bei der Erzeugung des Zusatz-Spektrums angewandter bisheriger Kalibrierfaktor, wobei $S_{alt}=1$ falls bei der Erzeugung des Zusatz-Spektrums kein bisheriger Kalibrierfaktor angewandt wurde. Mit dieser Variante kann der Kalibrierfaktor S recht genau bestimmt werden, auch wenn die Erkennung einzelner Peaks im Zusatz-Spektrum etwa aufgrund von Überlagerungen schwierig ist. Typischerweise wird zur Vorbereitung der Berechnung der Kreuzkorrelation das Zusatz-Spektrum (und nötigenfalls auch das Referenz-Spektrum) auf eine höhere Datenpunktdichte interpoliert. Bevorzugt erfolgt dies durch Hinzufügen von "Nullen" zum jeweils zugehörigen Interferogramm (sog. "Zerofilling"). Man beachte, dass das Referenz-Spektrum der Kalibriersubstanz experimentell ermittelt sein kann, oder auf Basis einer Modellberechnung ermittelt sein kann, bei der entweder ein hochaufgelöstes Spektrum, das mit Hilfe von Moleküldaten, z.B. wie sie in Datenbanken wie HITRAN enthalten sind oder ein gemessenes Spektrum mit höherer spektraler Auflösung die Basis bilden kann. Die Modellrechnung kann dann ein Modell für das Spektrometer enthalten, insbesondere die so genannte Apparatefunktion, auch Instrument Line Shape (ILS) genannt.

Ebenso vorteilhaft ist eine Variante, die vorsieht, dass der Vergleich des Referenz-Spektrums oder der Teilinformation daraus mit dem Zusatz-Spektrum oder einer Teilinformation daraus erfolgt, indem in einem ausgewählten Spektralbereich des Referenz-Spektrums und einem entsprechenden Spektralbereich des Zusatz-Spektrums das Integral K2 mit

$$\int_{\sigma_0-\delta}^{\sigma_0+\delta} f(\sigma) * g(s * \sigma)d\sigma = K2(s)$$

berechnet wird, mit $\sigma_0$: mittlere Wellenzahl-Position eines charakteristischen Absorptionsbereichs der Kalibriersubstanz, $\delta$: Integrationsweite, $\sigma$: Wellenzahl, s: Kalibrierfaktorvariable, f: Referenz-Spektrum; g: Zusatz-Spektrum, und für das Maximum von $K2(s)$ der zugehörige Wert s0 der Kalibrierfaktorvariable s bestimmt wird, und als Kalibrierfaktor $S=s0*S_{alt}$ ermittelt wird, mit $S_{alt}$: bei der Erzeugung des Zusatz-Spektrums angewandter bisheriger Kalibrierfaktor, wobei $S_{alt}=1$ falls bei der Erzeugung des Zusatz-Spektrums kein bisheriger Kalibrierfaktor angewandt wurde. Auch mit dieser Variante kann der Kalibrierfaktor S recht genau bestimmt werden, auch wenn die Erkennung einzelner Peaks im Zusatz-Spektrum etwa aufgrund von Überlagerungen schwierig ist. Man beachte, dass das Referenz-Spektrum der Kalibriersubstanz experimentell ermittelt sein kann, oder auf Basis einer Modellberechnung ermittelt sein kann (siehe oben).

Vorteilhaft ist weiterhin eine Variante, bei der der Vergleich des Referenz-Spektrums oder einer Teilinformation daraus mit dem wenigstens einen Zusatz-Spektrum oder einer Teilinformation daraus erfolgt, indem ausgehend vom Referenz-Spektrum eine Vielzahl von Modell-Spektren iterativ modelliert wird, wobei die Modell-Spektren jeweils mit dem experimentell erhaltenen Zusatz-Spektrum verglichen werden. Zur iterativen Modellierung der Modell-Spektren ("Fit-Routine") kann zum Beispiel der Levenberg-Marquardt-Algorithmus eingesetzt werden. Mit dieser Variante kann eine besonders genaue Bestimmung des Kalibrierfaktors S erfolgen.

Eine bevorzugte Weiterentwicklung dieser Variante sieht vor, dass in der Modellierung zumindest eine instrumentenbedingte Linienform sowie ein Interim-Kalibrierfaktor als Parameter berücksichtigt werden,

> und dass der Interim-Kalibrierfaktor-Wert IKW, der bei dem Modell-Spektrum mit der besten Übereinstimmung mit dem experimentell erhaltenen Zusatz-Spektrum verwendet wurde, bestimmt wird, und als Kalibrierfaktor $S=IKW*S_{alt}$ ermittelt wird,
> mit $S_{alt}$: bei der Erzeugung des Zusatz-Spektrums angewandter bisheriger Kalib- rierfaktor, wobei $S_{alt}=1$ falls bei der Erzeugung des Zusatz-Spektrums kein bishe-
> riger Kalibrierfaktor angewandt wurde. Die Bestimmung des Kalibrierfaktors ist hier besonders genau; insbesondere können Verzerrungen im Zusatz-Spektrum aufgrund der verwendeten Messinstrumente kompensiert werden. Man beachte, dass im Rahmen der Modellierung (Fit-Routine) auch weitere Größen als Ergebnis erhalten werden können, zum Beispiel Blendengrößen, die zu einer Streckung oder Stauchung der Frequenzachse beitragen.

*Weitere Varianten*

Bevorzugt ist weiterhin eine Variante, bei der unter Anwendung einer FourierTransformation aus dem Signal des Zusatz-Detektors unter Anwendung eines bisherigen Kalibrierfaktors $S_{alt}$ ein vorkorrigiertes Zusatz-Spektrum erzeugt wird, und dann das vorkorrigierte Zusatz-Spektrum oder eine Teilinformation daraus mit dem Referenz-Spektrum oder der Teilinformation daraus verglichen wird. Aus dem Vergleich des vorkorrigierten Zusatz-Spektrums (auf Basis von $S_{alt}$) oder der Teilinformation daraus mit dem Referenz-Spektrum oder der Teilinformation daraus kann der Update-Faktor UF ermittelt werden, mit dem der aktuelle Kalibrierfaktor $S=UF*S_{alt}$ berechnet werden kann. Diese Variante wird vor allem angewandt, um den bisherigen (insbesondere probenübergreifenden) Kalibrierfaktor $S_{alt}$ zu überprüfen, und ggf. ein damit berechnetes kalibriertes Spektrum der Messprobe zu bestätigen oder zu verwerfen und ggf. eine Neukalibrierung (Berechnung eines neuen, insbesondere probenübergreifenden Kalibrierfaktors) anzustoßen. Das vorkorrigierte Zusatz-Spektrum sollte bezüglich der Lage der Linien der Kalibriersubstanz bei brauchbarem/korrektem Kalibrierfaktor mit dem Referenz-Spektrum (innerhalb der gewünschten Genauigkeit) übereinstimmen.

Eine alternative Variante sieht vor, dass unter Anwendung einer FourierTransformation aus dem Signal des Zusatz-Detektors ein unkorrigiertes Zusatz-Spektrum erzeugt wird, und dann das unkorrigierte Zusatz-Spektrum oder eine Teilinformation daraus mit dem Referenz-Spektrum oder der Teilinformation daraus verglichen wird. Diese Variante wird vor allem angewandt, um unmittelbar einen "gesamten" Kalibrierfaktor S aus dem oder den aktuellen Kalibrieraufnahmen (insbesondere für eine aktuelle vermessene Messprobe oder für wenigstens eine nächste zu vermessende Messprobe) zu ermitteln. Für die Erzeugung des unkorrigierten Zusatz-Spektrums wird keinerlei (bisheriger) Korrekturfaktor $S_{alt}$ angewandt, bzw. der bisherige Korrekturfaktor $S_{alt}$ wurde zu "1" angenommen, was dasselbe ist. Es kann aber auch in dieser Variante eine Überprüfung eines bisherigen Kalibrierfaktors $S_{alt}$ erfolgen, indem mittels des unkorrigierten Zusatz-Spektrums ein "aktueller" Kalibrierfaktor (Soll-Kalibrierfaktor) S ermittelt wird und mit dem bisherigen Kalibrierfaktor $S_{alt}$, der zur Erzeugung des kalibrierten Spektrums der Messprobe einstweilen angewandt wurde, verglichen wird. Weicht der "aktuelle" Kalibrierfaktor S nicht oder nur geringfügig vom bisherigen Kalibrierfaktor $S_{alt}$ ab, kann das mit dem bisherigen Kalibrierfaktor berechnete, kalibrierte Spektrum der Messprobe als brauchbar bestätigt werden.

Vorteilhaft ist eine Variante, in der ein Behälter enthaltend Kalibriersubstanz in den Strahlengang des Lichts zwischen dem Interferometer und dem Zusatz-Detektor angeordnet wird. Dadurch können praktisch beliebige Kalibriersubstanzen in beliebiger Konzentration in den Strahlengang des Lichts eingebracht werden, um eine markante Absorption zu erzeugen. Die Position des Behälters "hinter" dem Interferometer (zwischen Interferometer und Zusatz-Detektor) hat den Vorteil, dass dann die Kalibriersubstanz die Messung des Spektrums der Messprobe nicht überlagert. Alternativ kann auch der Behälter im gemeinsamen Strahlengang des Lichts zum Detektor und zum Zusatz-Detektor angeordnet werden, also auch "im" oder "vor" dem Interferometer.

In einer alternativen Variante ist als Kalibriersubstanz eine in der FT-Spektrometer-Anordnung omnipräsente Substanz gewählt. Dies vereinfacht den Messaufbau. Die omnipräsente Substanz kann insbesondere ein Luftbestandteil sein, wenn die FT-Spektrometer-Anordnung der Luft ausgesetzt setzt.

Bevorzugt ist eine Variante, bei der die Kalibriersubstanz Wasserdampf oder Methan oder Acetylen ist. Diese Substanzen sind kostengünstig verfügbar.

Im Rahmen der vorliegenden Erfindung wird eine erfindungsgemäße, oben beschriebene FT-Spektrometer-Anordnung in einem erfindungsgemäßen, oben beschriebenen Verfahren verwendet. Dadurch können mit hoher Genauigkeit kalibrierte Spektren bei hoher Verfügbarkeit der FT-Spektrometer-Anordnung gewonnen werden.

Bei einer bevorzugten Variante erfolgt die Ermittlung des Kalibrierfaktors und die Erzeugung des kalibrierten Spektrums durch eine Auswerteeinheit der FT-Spektrometer-Anordnung in situ. Dadurch stehen die kalibrierten Spektren unmittelbar zur Verfügung.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Fig. 1     zeigt schematisch den Aufbau einer beispielhaften Ausführungsform einer erfindungsgemäßen FT-Spektrometer-Anordnung;

Fig. 2     zeigt schematisch einen beispielhaften Verlauf der Amplitude des Messsignals am Detektor oder Zusatz-Detektor und der Amplitude des Messsignals am Referenz-Detektor als Funktion des Gangunterschieds der Interferometerarme;

Fig. 3     zeigt schematisch beispielhaft das fouriertransformierte Messsignal eines Zusatz-Detektors als Funktion der Wellenzahl ("Zusatz-Spektrum");

Fig. 4a     zeigt schematisch einen beispielhaften Ausschnitt aus einem Zusatz-Spektrum, zur Illustration der Bestimmung des Kalibrierfaktors;

Fig. 4b     zeigt schematisch einen der Fig. 4a entsprechenden Ausschnitt aus einem Referenz-Spektrum, zur Illustration der Bestimmung des Kalibrierfaktors;

Fig. 5     zeigt schematisch ein Diagramm eines beispielhaften Integrals K1 einer Kreuzkorrelation zur Bestimmung des Kalibrierfaktors;

Fig. 6     zeigt schematisch ein Diagramm einer beispielhaften Apparatefunktion als Funktion der Wellenzahl;

Fig. 7a     illustriert schematisch die Erzeugung eines mit einem Kalibrierfaktor korrigierten Spektrums einer Messprobe, in einer Variante mit Bestimmung eines Updatefaktors und direkter Bestimmung des korrigierten Spektrums aus dem Interferogramm der Messprobe;

Fig. 7b     illustriert schematisch die Erzeugung eines mit einem Kalibrierfaktor korrigierten Spektrums einer Messprobe, in einer Variante mit Bestimmung eines Updatefaktors und Umrechnung der Frequenzachse eines vorkalibrierten Spektrums der Messprobe;

Fig. 7c     illustriert schematisch die Erzeugung eines mit einem Kalibrierfaktor korrigierten Spektrums einer Messprobe, in einer Variante mit direkter Bestimmung des Korrekturfaktors aus einem unkorrigierten Zusatz-Spektrum;

Fig. 8a     illustriert schematisch eine Variante eines erfindungsgemäßen Messverfahrens, mit gemeinsamen Aufnahmen, wobei mit Kalibrieraufnahmen, die zeitgleich mit Messaufnahmen stattfinden, der Kalibrierfaktor für diese Messaufnahmen bestimmt wird;

Fig. 8b     illustriert schematisch eine Variante eines erfindungsgemäßen Messverfahrens, mit gemeinsamen Aufnahmen, wobei mit Kalibrieraufnahmen, die vor Messaufnahmen stattfinden, der Kalibrierfaktor für die Messaufnahmen bestimmt wird;

Fig. 8c     illustriert schematisch eine Variante eines erfindungsgemäßen Messverfahrens, wobei ein Kalibrierfaktor aus einem gemittelten Zusatz-Spektrum als gleitender Durchschnitt bestimmt wird;

Fig. 8d     illustriert schematisch eine Variante eines erfindungsgemäßen Messverfahrens, wobei ein probenübergreifender Kalibrierfaktor auf Basis einer Kalibrieraufnahme mit erhöhter spektraler Auflösung angewandt wird;

Fig. 8e     illustriert schematisch eine Variante eines erfindungsgemäßen Messverfahrens, wobei ein probenübergreifender Kalibrierfaktor auf Basis einer Kalibrieraufnahme mit erhöhter spektraler Auflösung angewandt wird, und die Brauchbarkeit des probenübergreifenden Kalibrierfaktors mit Monitoraufnahmen überwacht wird.

Erfindungsgemäße FT-Spektrometer-Anordnung

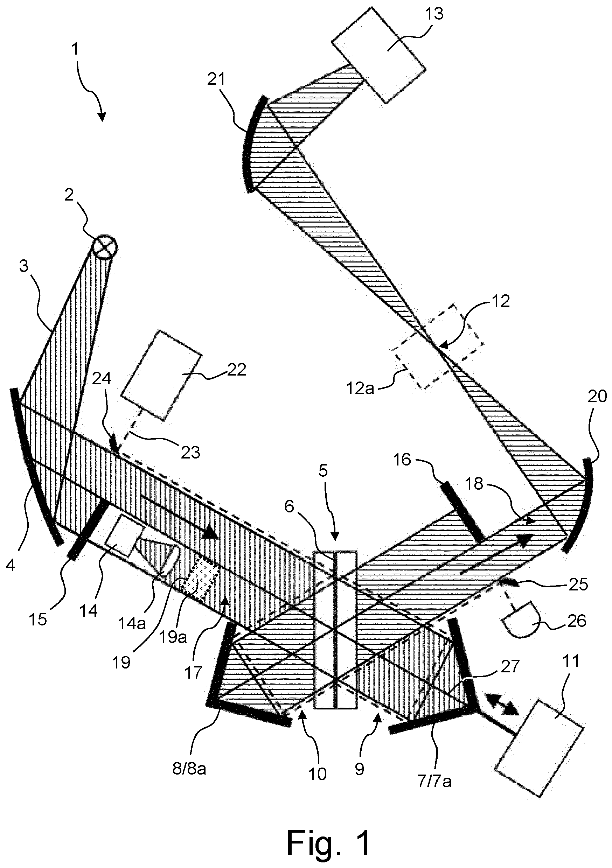

Die Fig. 1 zeigt in schematischer Ansicht den Aufbau einer beispielhaften Ausführungsform einer erfindungsgemäßen FT-Spektrometer-Anordnung 1.

Die FT-Spektrometer-Anordnung 1 umfasst eine Lichtquelle 2, die breitbandig Licht 3 emittiert, in der gezeigten Ausführungsform Infrarot(=IR)-Licht. Mittels einer kollimierenden Anordnung, in der gezeigtem Ausführungsform einem kollimierenden Spiegel 4, wird das Licht 3 einem Interferometer 5 zugeleitet.

Das Interferometer 5 umfasst einen Strahlteiler 6 sowie zwei Reflektoren 7, 8, die als Retroreflektoren (Würfeleckenspiegel) 7a, 8a ausgebildet sind, wodurch zwei Interferometerarme 9, 10 ausgebildet werden. Mittels einer Vorrichtung 11 zur Veränderung des optischen Gangunterschieds kann die Länge des Interferometerarms 9 verändert werden, und dadurch der optische Gangunterschied zwischen den Interferometerarmen 9, 10 verändert bzw. eingestellt werden. Die Vorrichtung 11 kann beispielsweise einen elektrischen Antrieb für den Reflektor 7 umfassen, mit dem der Reflektor 7 entlang der optischen Achse 27 des Interferometerarms 9 verschoben werden kann. Typischerweise versetzt der Antrieb 11 den Reflektor 7 in eine ständige Schwingung entlang der Richtung der Achse 27. Der Reflektor 8 ist in der gezeigten Ausführungsform starr (ortsfest) ausgebildet; alternativ kann der Reflektor 8 ebenfalls beweglich sein (nicht näher dargestellt), vgl. hierzu z.B. die US 5 309 217 A.

Am Strahlteiler 6 wird das von der Lichtquelle 2 ankommende Licht 3 zum Teil zum Reflektor 7 durchgelassen und von dort zurück zum Strahlteiler 6 reflektiert, und zum Teil zum Reflektor 8 reflektiert und von dort zurück zum Strahlteiler 6 reflektiert. Licht 3 vom Reflektor 7 wird am Strahlteiler 6 zum Teil in Richtung der Messposition 12 und des Detektors 13 reflektiert, und zum Teil in Richtung eines Zusatz-Detektors 14 durchgelassen. Licht 3 vom Reflektor 8 wird am Strahlteiler 6 zum Teil in Richtung der Messposition 12 und des Detektors 13 durchgelassen, und zum Teil in Richtung des Zusatz-Detektors 14 reflektiert. Man beachte, dass im Strahlengang des Lichts 3 zwischen der Lichtquelle 2 und dem Interferometer 5 eine erste Blende 15 angeordnet ist, mit der ein Teil des Lichts 3 (hier ca. die Hälfte) abgeschattet wird. Ebenso ist im Strahlengang des Lichts 3 zwischen dem Interferometer 5 und der Messposition 12 eine zweite Blende 16 angeordnet, mit der ein ebenfalls ein Teil des Lichts (hier ca. die Hälfte) abgeschattet wird.

Ein Teilstrahl 17 des Lichts 3 gelangt somit vom Interferometer 5 zum Zusatz-Detektor 14, und ein Teilstrahl 18 des Lichts 3 gelangt zur Probenposition 12 und zum Detektor 13. Der Teilstrahl 17 wird mit einer Fokussierlinse 14a in eine Eingangsblende des Zusatz-Detektors 14 fokussiert. Im Teilstrahl 17 kann zudem ein Behälter 19 enthaltend eine Kalibriersubstanz 19a (z.B. Methangas) angeordnet werden, der für das Licht 3 in einem Spektralbereich, in dem die Kalibriersubstanz Signaturen besitzt, die zur Kalibrierung genutzt werden, im Wesentlichen transparent ist. Der Teilstrahl 18 wird mittels einer fokussierenden Anordnung, die in der gezeigten Ausführungsform als ein fokussierender Spiegel 20 ausgebildet ist, auf die Messposition 12 fokussiert, an der eine Messprobe 12a (zum Beispiel in einem für Licht im genutzten Spektralbereich im Wesentlichen transparenten Behälter) angeordnet ist. Die Strahlung 3, die die Messposition 12 passiert hat, wird von einer abbildenden Anordnung, die hier als ein abbildender Spiegel 21 ausgebildet ist, in eine Eingangsblende des Detektors 13 fokussiert.

Weiterhin umfasst die FT-Spektrometer-Anordnung 1 einen Referenz-Laser 22, der ein Referenz-Licht 23 in Form eines Laserstrahls aussendet; der Laserstrahl wird bevorzugt im sichtbaren Spektralbereich gewählt. Das Referenz-Licht 23 wird mittels eines Spiegels 24 parallel zum Licht in das Interferometer 5 geleitet, wo es analog zum Licht 3 am Strahlteiler 6 zum Teil durchgelassen und zum Teil reflektiert wird, und an den Reflektoren 7, 8 reflektiert wird. Im Strahlengang hinter dem Interferometer 5, also zwischen Interferometer 5 und Detektor 13, wird das Referenz-Licht 23 durch einen weiteren Spiegel 25 in einen Referenz-Detektor 26 geleitet und dort registriert. Das Referenz-Licht 23 durchläuft somit im Interferometer im Wesentlichen denselben optischen Weg wie das Licht 3. Mittels des Referenz-Detektors 26 kann die konstruktive und destruktive Interferenz des Referenz-Lichts als Folge des sich verändernden optischen Gangunterschieds der Interferometerarme 9, 10 vermessen werden. Bei bekannter (effektiver) Laserwellenlänge des Referenz-Lichts 23 kann der Gangunterschied als Funktion der Zeit bestimmt werden, insbesondere für die Zeitpunkte, an denen der Detektor 13 ausgelesen wird. Die effektive Laserwellenlänge kann im Rahmen der Erfindung dadurch bestimmt werden, dass mittels des Zusatz-Detektors 14 ein Zusatz-Spektrum erzeugt wird, welches Absorptionslinien der Kalibriersubstanz 19a (die im Behälter 19 enthalten ist oder in der FT-Spektrometer-Anordnung 1 allgegenwärtig ist) enthält, mit einem Referenz-Spektrum der Kalibriersubstanz verglichen wird. Dadurch kann ein Kalibrierfaktor ermittelt werden, mit dem die effektive Laserwellenlänge kalibriert werden kann. Die kalibrierte, effektiven Laserwellenlänge kann herangezogen werden, um mittels der Signale des Detektors ein Interferogramm der Messprobe zu erzeugen, mit dem durch Fouriertransformation (=FT) ein kalibriertes, also hoch genaues Spektrum der Messprobe erzeugt wird.

Man beachte, dass die FT-Spektrometer-Anordnung 1 ein Ausführungsbeispiel ist, das vielfältig abgewandelt werden kann. Beispielsweise können an die Stelle der gekrümmten/abbildenden Spiegel 4, 20 und 21 auch Linsenanordnungen mit entsprechenden Abbildungseigenschaften, ggf. in Kombination mit Planspiegeln, treten. Ebenso können der Zusatzdetektor 14 und der Behälter 19 auch vor der zweiten Blende 16 (statt vor der ersten Blende 15) angeordnet sein.

*Erfindungsgemäße Messverfahren*

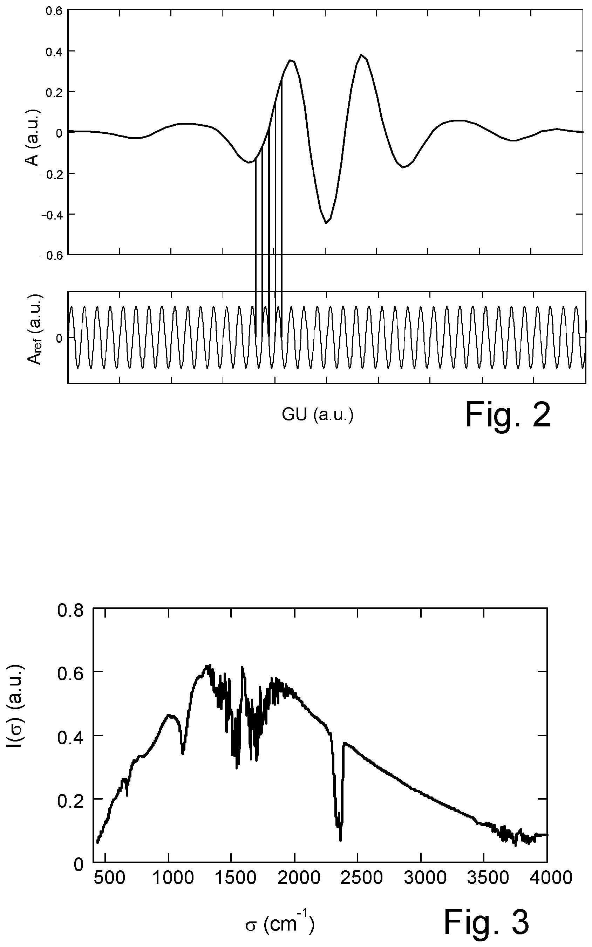

Im Rahmen des erfindungsgemäßen Messverfahrens werden ein Detektor und ein Zusatz-Detektor bei definierten Gangunterschieden ausgelesen; man beachte, dass das Messverfahren im Rahmen der Erfindung mit einer erfindungsgemäßen FTIR-Spektrometer-Anordnung durchgeführt wird. **Fig. 2** illustriert beispielhaft in der oberen Hälfte einen Ausschnitt des Messsignals A an einem Detektor oder Zusatz-Detektor als Funktion des Gangunterschieds GU (in willkürlichen Einheiten a.u.) einer erfindungsgemäßen FT-Spektrometer-Anordnung, wie etwa in Fig. 1 dargestellt; man beachte, dass bei gleichförmiger Änderung des Gangunterschieds bzw. gleichförmiger Bewegung des Reflektors (Bzz. 7 in Fig. 1) der Gangunterschied eine lineare Funktion zur Zeit ist. In der unteren Hälfte ist weiterhin der Verlauf (in willkürlichen Einheiten) eines Messsignals $A_{ref}$ eines Referenz-Detektors als Funktion des (selben) Gangunterschieds dargestellt. Der Gleichspannungsanteil wird durch ein Hochpassfilter entfernt. Das zugehörige Referenz-Laserlicht passiert das selbe Interferometer wie das Licht. Am Referenz-Detektor wechseln sich als Funktion des Gangunterschieds GU konstruktive und destruktive Interferenz ab. In der gezeigten Variante ist bei jedem Nulldurchgang des Messsignals $A_{ref}$ am Referenz-Detektor ein Auslesen des Detektors oder Zusatz-Detektors vorgesehen ("Abtastung" an den Nulldurchgängen); diese Nulldurchgänge haben einen Abstand des optischen Gangunterschieds von $\lambda/2$, mit $\lambda$: Wellenlänge des Referenz-Laserlichts (man beachte, dass $c=\lambda/F$, mit F: Laserfrequenz und c: Lichtgeschwindigkeit). Entsprechend sind die Auslesepositionen des Detektors und des Zusatz-Detektors (im besten Fall) so genau bekannt wie die Laserwellenlänge des Referenz-Lasers. Die Auslesepositionen gehen über die Fouriertransformation in die Genauigkeit der Frequenzachse der Spektren und Zusatz-Spektren ein, die auf Basis der Messsignale des Detektors und des Zusatz-Detektors gewonnen werden.

Bei Verwendung von Laserdioden im Referenz-Laser kann es insbesondere durch Alterung oder auch durch Temperaturschwankungen zu Schwankungen der Laserfrequenz kommen. Auch ein schräger Einfall des Referenz-Laserstrahls in das Interferometer kann zu einer Veränderung der scheinbaren Laserfrequenz führen. Effekte dieser Art können zu einer "effektiven" Laserfrequenz $F_{eff}$ zusammengefasst werden. Die Abweichung der effektiven Laserfrequenz $F_{eff}$ von der (festen) nominellen Laserfrequenz $F_{no}$ durch den Kalibrierfaktor S beschrieben, mit $F_{eff}=F_{no}*S$. Ist der Kailbrierfaktor S für eine FT-Spektrometer-Anordnung bekannt, können mit dieser Anordnung genaue, mittels des Kalibrierfaktors korrigierte Spektren von Messproben erzeugt werden. Man beachte, dass der aktuelle Kalibrierfaktor S in der Praxis meist über eine aktuelle, effektive Laserfrequenz des Referenz-Lasers gespeichert wird. Im Rahmen der Erfindung wird der Wert des Kalibrierfaktors S vorteilhaft über den Zusatz-Detektor bestimmt (siehe weiter unten).

Im erfindungsgemäßen Verfahren werden zur Erzeugung eines Spektrums einer Messprobe ein oder mehrere Messaufnahmen durchgeführt; eine einzelne Messaufnahme entspricht dabei wenigstens einem Durchgang durch den (mittels der Vorrichtung zur Veränderung des optischen Gangunterschieds) zur Verfügung stehenden Bereich des optischen Gangunterschieds des Interferometers. Aus dem Signal des Detektors der einen oder der mehreren Messaufnahmen können dann ein oder mehrere Interferogramme ermittelt werden. Man beachte, dass je Durchgang durch den Gangunterschied oder je Messaufnahme oder für alle Messaufnahmen zusammen ein Interferogramm erzeugt werden kann, je nachdem, wie aufaddiert/gemittelt wird. Das eine oder die mehreren Interferogramme können dann einer Fouriertransfomration unterzogen werden. Falls nur ein Interferogramm bereitgestellt wurde, kann dessen Fouriertransformierte als das Spektrum der Messprobe angesehen werden; falls mehrere Interferogramme bereit gestellt wurden, werden deren Fouriertransformierte addiert/gemittelt, um das Spektrum der Messprobe zu erhalten.

In entsprechender Weise werden zur Erzeugung des Zusatz-Spektrums einer Kalibriersubstanz ein oder mehrere Kalibrieraufnahmen durchgeführt, wobei aus dem Signal des Zusatz-Detektors bzw. zugehörigen ein oder mehreren Zusatz-Interferogrammen durch Fouriertransformation das Zusatz-Spektrum der Kalibriersubstanz erhalten wird.

Die **Fig. 3** zeigt beispielhaft ein so erhaltenes Zusatz-Spektrum, also ein Diagramm auftragend die Intensität I der Fouriertransformierten von (hier) einem, mittels des Signals des Zusatz-Detektors ermittelten Zusatz-Interferogramms als Funktion der Wellenzahl $\sigma$ (man beachte, dass $\sigma=1/\lambda$, mit $\lambda$: Wellenlänge des Lichts). Das Zusatz-Spektrum enthält zum Einen die spektrale Verteilung der Emission der Lichtquelle, die hier ihr spektrales Maximum im Bereich zwischen 1000 und 2000 cm$^{-1}$ hat. Zum anderen erfolgt durch die Kalibriersubstanz (und ggf. weitere Substanzen) im Strahlengang lokal eine charakteristische Absorption. Besonders scharf ist hier im Beispiel die Absorption von Wasser in den Bereichen 1400-1900 cm$^{-1}$ und 3500-4000 cm$^{-1}$, die gut für eine Kalibrierung verwendet werden kann.

Man beachte, dass ein unmittelbar aus der Fouriertransformation erhaltenes "rohes" Spektrum durch ein Hintergrund-Spektrum (aufgenommen ohne die interessierende Substanz, hier der Kalibriersubstanz) dividiert werden kann; in einem so erhaltenen "bereinigten" Spektrum (auch Transmissionsspektrum genannt) können die Spektrallinien der die interessierende Substanz isoliert erkannt werden (nicht näher dargestellt). Im Rahmen der Erfindung können sowohl "rohe" als auch "bereinigte" Spektren genutzt werden.

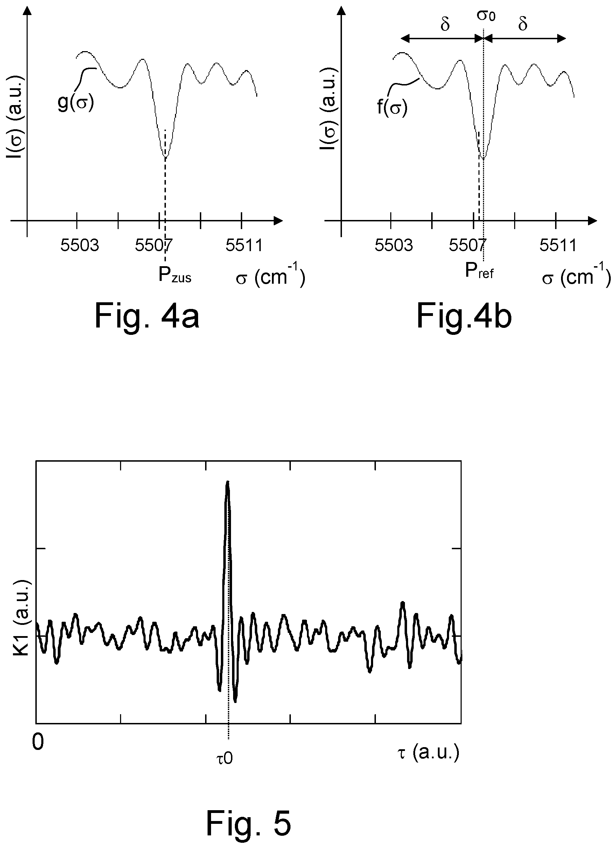

In **Fig. 4a** ist schematisch der Wellenzahlbereich von ca. 5503 bis 5512 1/cm eines Zusatz-Spektrums (vgl. zum Beispiel das Zusatzspektrum aus Fig. 3) vergrößert dargestellt. In diesem Wellenzahlbereich erzeugt die Kalibriersubstanz diverse Absorptionslinien, insbesondere den stärksten Absorptionspeak bei $P_{zus}$

bei ca. 5507,3 cm$^{-1}$ (genauer: 5507,321). Die Wellenzahlachse enthält dabei eine bei der Fouriertransformation zugrunde gelegte Referenz-Laserfrequenz (oder eine entsprechende Referenz-Laserwellenlänge). Die Wellenzahlachse (bzw. die Referenz-Laserfrequenz) soll einer Kalibrierung unterzogen werden.

Zum Vergleich ist weiterhin in **Fig. 4b** ein Ausschnitt aus einem Referenz-Spektrum der Kalibriersubstanz dargestellt, der ebenfalls den Wellenzahlbereich von ca. 5503 bis 5512 1/cm abdeckt; von dem Referenz-Spektrum wird angenommen, dass die Wellenzahlachse exakt stimmt. Das Absorptionsspektrum von Fig. 4b ist dem Absorptionsspektrum von Fig. 4a sehr ähnlich; je nach Grad der bisherigen Fehlkalibrierung des Spektrums von Fig. 4a ist das Spektrum von Fig. 4a jedoch gegenüber dem Spektrum von Fig. 4b gestreckt oder gestaucht, was durch die Verschiebung der Absorptionspeaks erkennbar ist. Im gezeigten Beispiel ist erkennbar, dass der stärkste Absorptionspeak $P_{ref}$ ($=\sigma_0$) hier bei ca. 5507,5 cm$^{-1}$ liegt (genau: 5507,5137) und gegenüber dem Peak $P_{zus}$ im Spektrum, das mit dem Zusatzdetektor aufgenommen wurde, verschoben ist (Peakposition von $P_{zus}$ im Spektrum des Zusatzdetektors von Fig. 4b durch gestrichelte Linie gekennzeichnet).

Mittels dieser erkannten Verschiebung kann unmittelbar eine Kalibrierung erfolgen. Der Kalibrierfaktor S ergibt sich zu $S=(P_{ref}/P_{zus})*S_{alt}$ , wobei $S_{alt}$ den Kalibrierfaktor bezeichnet, der dem Zusatz-Spektrum zugrunde gelegen hat. Falls das Zusatz-Spektrum unkorrigiert war (also auf der unveränderten, nominellen Laserfrequenz $F_{no}$ beruht hat), kann $S_{alt}=1$ gesetzt werden. Falls für das Zusatz-Spektrum bereits eine effektive Laserfrequenz zu $F_{eff}(alt)=F_{no}*S_{alt}$ (mit $S_{alt}$ ungleich 1) angenommen wurde, kann die effektive Laserfrequenz $F_{eff}$ mit dem Faktor $P_{ref}/P_{zus}=UF$ aktualisiert werden (mit UF: Updatefaktor), also $F_{eff}(neu)=F_{eff}(alt)*UF$ bzw. $F_{eff}(neu)=F_{no}*S$ bzw. $F_{eff}(neu)=F_{no}*S_{alt}*UF$. Im obigen Beispiel ist UF=$P_{ref}/P_{zus}$=5507,5137/5507,321=1,0000349898. Man beachte, dass die Lagen $P_{ref}$ und $P_{zus}$ typische Teilinformationen aus dem Referenz-Spektrum und dem Zusatz-Spektrum sind, die hier zur Bestimmung des Kalibrierfaktors S genutzt werden.

Mittels des (neuen) Kalibrierfaktors S bzw. der (neuen) effektiven Laserfrequenz $F_{eff}=F_{no}*S$ kann sodann die Erzeugung eines Spektrums einer Messprobe hochgenau erfolgen.

Falls die Bestimmung der Lage einzelner Peaks im Zusatz-Spektrum (und evtl. auch im Referenz-Spektrum) schwierig sein sollte, kann der Kalibrierfaktor auch über die Kreuzkorrelation von Zusatz-Spektrum und Referenz-Spektrum über einen ausgewählten (charakteristischen) Spektralbereichs (Absorptionsbereich) erfolgen. Dazu wird das Integral K1 berechnet mit

$$\int_{\sigma_0-\delta}^{\sigma_0+\delta} f(\sigma) * g(\sigma + \tau)d\sigma = K1(\tau)$$

mit $\sigma_0$: mittlere Wellenzahl-Position des charakteristischen Absorptionsbereichs der Kalibriersubstanz, $\delta$: Integrationsweite, $\sigma$: Wellenzahl, $\tau$: Wellenzahlverschiebungsvariable, f: Referenz-Spektrum; g: Zusatz-Spektrum. Über das Integral K1 wird eine Verschiebung der Wellenzahlachse, ausgedrückt durch die Wellenzahlverschiebungsvariable $\tau$, untersucht.

Die **Fig. 5** zeigt beispielhaft in einem Diagramm den Wert eines Integrals K1 als Funktion der Verschiebungsvariable $\tau$; man beachte, dass $\tau$ die Dimension 1/cm hat. Bei $\tau 0$ hat das Integral K1 ein Maximum, d.h. bei dieser Verschiebung zwischen dem Zusatz-Spektrum g und dem Referenz-Spektrum f kommt es zur größten Übereinstimmung. Der (neue) Kalibrierfaktor S ergibt sich dann mit $S=[(\sigma_0/(\sigma_0+\tau 0)]*S_{alt}$.

Anstelle einer Integrals K1 einer Kreuzkorrelation kann auch das Integral K2 bestimmt werden mit

$$\int_{\sigma_0-\delta}^{\sigma_0+\delta} f(\sigma) * g(s * \sigma)d\sigma = K2(s)$$

mit $\sigma_0$: mittlere Wellenzahl-Position des charakteristischen Absorptionsbereichs der Kalibriersubstanz, $\delta$: Integrationsweite, $\sigma$: Wellenzahl, s: Kalibrierfaktorvariable, f: Referenz-Spektrum; g: Zusatz-Spektrum. Über das Integral K2 wird eine Streckung der Wellenzahlachse, ausgedrückt durch die Kalibrierfaktorvariable s, untersucht.

Das Integral K2 als Funktion der Kalibrierfaktorvariable s (welches hier nicht gesondert dargestellt ist, aber ähnlich aussieht wie das in Fig. 5 dargestellte Integral K1) hat dann ein zu bestimmendes Maximum bei s0; man beachte, dass die Kalibrierfaktorvariable s dimensionslos ist, und ebenso ist s0 dimensionslos. Der (neue) Kalibrierfaktor S bestimmt sich zu $S=s0*S_{alt}$.

Die vom jeweiligen Integral K1, K2 über die Integrationsweite $\delta$ um $\sigma_0$ herum umfassten Bereiche der Funktionen f und g stellen typische Teilinformation des Referenz-Spektrums und des Zusatz-Spektrums dar, die zur Bestimmung des Kalibrierfaktors S genutzt werden.

Alternativ ist es auch noch möglich, ausgehend vom Referenz-Spektrum oder einer Teilinformation daraus (etwa einem Ausschnitt wie in Fig. 4b dargestellt)

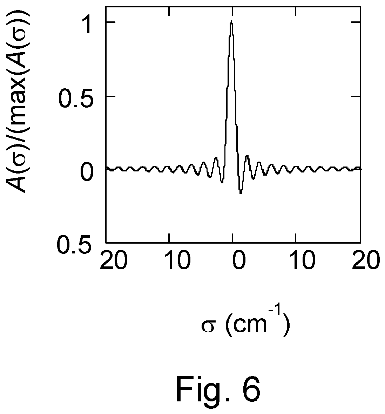

Modell-Spektren iterativ zu modellieren und das Modell-Spektrum zu bestimmen, welches die beste Übereinstimmung mit dem Zusatz-Spektrum aufweist. Dabei wird zumindest eine durch die verwendete FT-Spektrometer-Anordnung ("Instrument") bedingte Linienform berücksichtigt ("instrument line shape" ILS); beispielhaft ist eine solche Linienform bzw. Apparatefunktion in **Fig.** 6 gestellt. In Fig. 6 ist dargestellt, wie bedingt durch das Instrument eine unendlich scharfe Absorptionslinie ("delta-Funktion") sich in einem gemessenen (Zusatz-)Spektrum darstellen würde. Das Instrument bewirkt in der Regel sowohl eine gewisse Linienverbreiterung, als auch eine gewisse Asymmetrie der gemessenen Absorptionslinie. Weiterhin geht in die Modellierung ein Interim-Kalibrierfaktor-Wert IKW ein, der als Frequenzfehler bei der Messung des Zusatz-Spektrums für das jeweilige Modell-Spektrum unterstellt wird. Der IKW des Modell-Spektrums mit der besten Übereinstimmung mit dem experimentellen Zusatz-Spektrum kann dann für die Bestimmung des Kalibrierfaktors S genutzt werden, mit $S=IKW*S_{alt}$. Zudem können mit dem Modell-Spektrum auch noch weitere Parameter des FT-Spektrometer-Aufbaus bestimmt werden.

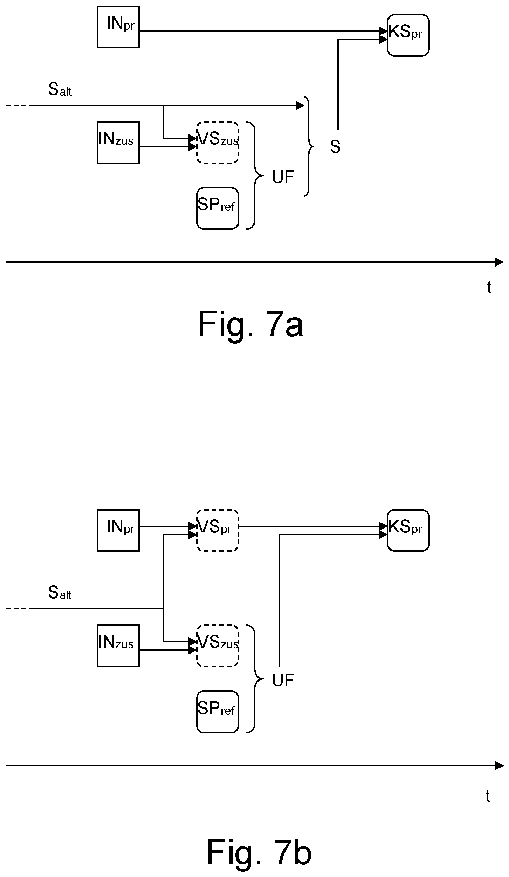

In den Figuren 7a bis 7c wird kurz beispielhaft erläutert, wie die Bestimmung eines korrigierten Spektrums einer Messprobe im Rahmen der Erfindung erfolgen kann. In den Beispielen von Fig. 7a bis 7c sind jeweils ein oder mehrere Messaufnahmen, die der Erzeugung eines Spektrums einer Messprobe dienen, durch ein Quadrat mit spitzen Ecken dargestellt. Das Signal der einen oder der mehreren Messaufnahmen wird durch ein Interferogramm (ggf. auch einen Satz von Interforgrammen) $IN_{pr}$ repräsentiert. Entsprechendes gilt für Kalibrieraufnahmen, die durch ein Zusatz-Interferogramm (oder einen Satz von Zusatz-Interferogrammen) $IN_{zus}$ repräsentiert werden. Erhaltene Spektren können mit dem Kalibrierfaktor S kalibriert sein (KS, kalibriertes Spektrum) oder anhand eines bisherigen Kalibrierfaktors $S_{alt}$ vorkalibriert sein (VS, vorkalibriertes Spektrum) oder unkalibriert sein (US, unkalibriertes Spektrum); über den tiefgestellten Index pr oder zus ist die Zuordnung zur Messprobe/Messaufnahmen am Detektor (pr) oder zur Kalibriersubstanz/Kalibrieraufnahmen am Zusatz-Detektor (zus) angezeigt. Das (keiner Kalibrierung unterliegende) Referenz-Spektrum der Kalibriersubstanz wird mit $SP_{ref}$ markiert.

In den Beispielen von Fig. 7a bis 7c erfolgen die Messaufnahmen und Kalibrieraufnahmen als gemeinsame Aufnahmen zeitgleich bezüglich der Zeit t.

In der Variante von **Fig. 7a** wird anhand der wenigstens einen Kalibrieraufnahmen $IN_{zus}$ mit dem bisherigen Kalibrierfaktor $S_{alt}$ durch Fouriertransformation ein vorkalibriertes Zusatz-Spektrum $VS_{zus}$ erzeugt. Dieses wird mit dem Referenz-Spektrum verglichen und dadurch ein Updatefaktor UF bestimmt. Aus dem bisherigen Kalibrierfaktor $S_{alt}$ und dem Update-Faktor UF wird der (aktuelle) Kalibrierfaktor S bestimmt. Mit diesem Kalibrierfaktor S wird dann aus der wenigstens einen Messaufnahme $IN_{pr}$ das kalibrierte Spektrum $KS_{pr}$ der Messprobe durch Fouriertransformation erzeugt. In der Praxis kann dafür die bisherige effektive Laserfrequenz, die auf $S_{alt}$ beruhte und bei der Erzeugung von $VS_{zus}$ angewandt wurde, mit dem Update-Faktor UF multipliziert werden, so dass die neue effektive Laserfrequenz sodann auf dem aktualisierten Kalibrierfaktor S beruht und für die Erzeugung von $KS_{pr}$ angewandt werden kann.

In der in **Fig. 7b** dargestellten Variante wird ebenfalls anhand der wenigstens einen Kalibrieraufnahmen $IN_{zus}$ mit dem bisherigen Kalibrierfaktor $S_{alt}$ durch Fouriertransformation ein vorkalibriertes Zusatz-Spektrum $VS_{zus}$ erzeugt. Dieses wird wieder mit dem Referenz-Spektrum verglichen und dadurch ein Updatefaktor UF bestimmt. Zudem wird anhand der wenigstens einen Messaufnahme $IN_{pr}$ mit dem bisherigen Kalibrierfaktor $S_{alt}$ durch Fouriertransformation ein vorkalibriertes Spektrum $VS_{pr}$ der Messprobe erzeugt. Dessen Frequenzachse wird dann mittels des Updatefaktors UF korrigiert. Entsprechend ist auch in diesem Fall im korrigierten Spektrum $KS_{pr}$ der Messprobe der aktualisierte Kalibrierfaktor $S=S_{alt}*UF$ enthalten.

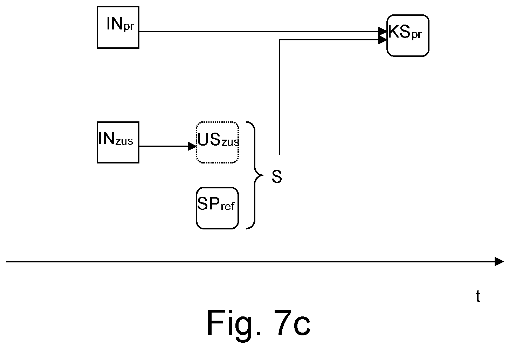

In der in **Fig. 7c** dargestellten Variante wird anhand der wenigstens einen Kalibrieraufnahme $IN_{zus}$ ohne Kalibrierung durch Fouriertransformation ein unkalibriertes Zusatz-Spektrum $US_{zus}$ erzeugt. Dieses wird mit dem Referenz-Spektrum verglichen und dadurch direkt der aktuelle Kalibrierfaktor S bestimmt. Mit diesem Kalibrierfaktor S wird dann aus der wenigstens einen Messaufnahme $IN_{pr}$ das kalibrierte Spektrum $KS_{pr}$ der Messprobe durch Fouriertransformation erzeugt.

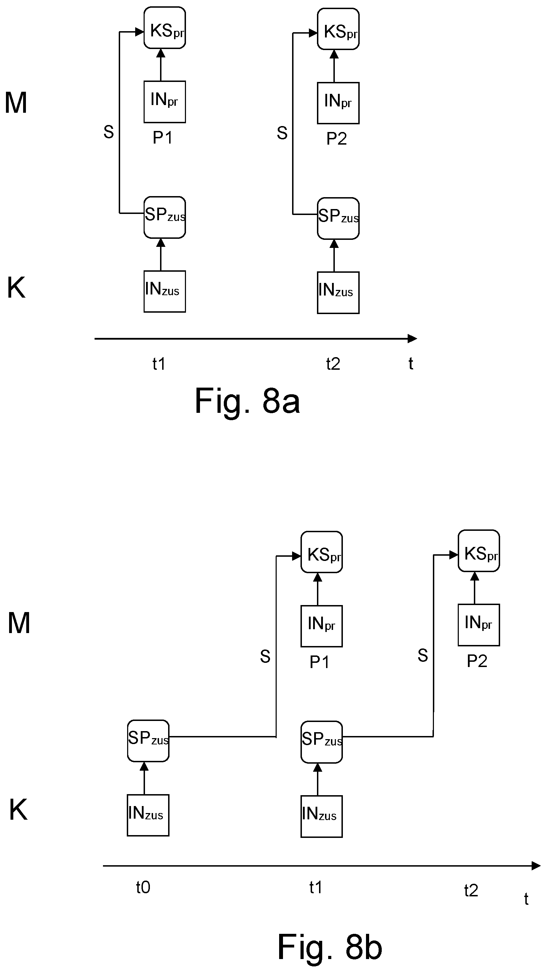

In den Figuren 8a bis 8e werden verschiedene Varianten des erfindungsgemäßen Messverfahrens erläutert, wobei der zeitliche Ablauf von Messaufnahme(n) zu einer Messprobe und Kalibrieraufnahme(n) zur Kalibrierung der Spektren der Messprobe erläutert werden; man beachte, dass dabei jeweils eine Vermessung einer Mehrzahl von Messproben vorgesehen ist.

Die Bezeichnungen und Symbole stimmen weitgehend mit den Bezeichnungen von Fig. 7a-7c überein (siehe oben). Zusätzlich sind noch unterschiedliche Messproben nummeriert mit P1, P2, P3. Zudem sind auch Monitoraufnahmen vorgesehen, zu denen der tiefgestellte Index mn gehört, und mit denen Hilfs-Kalibrierfaktoren HS bestimmt werden; die Vergleiche V mit dem (letztgültigen) Kalibrierfaktor S werden in Kreisen dargestellt. Die In Fig. 7a-7c erläuterten Möglichkeiten der Bestimmung von S werden nicht mehr einzeln aufgeschlüsselt, entsprechend wird zusammenfassend bei der Bestimmung von S nur noch allgemein ein Zusatz-Spektrum $SP_{zus}$ der wenigstens einen Kalibriermessung zugeordnet, wieder repräsentiert durch $IN_{zus}$. Weiterhin ist in einer Variante ein gemitteltes (Zusatz-)Spektrum $GS_{zus}$ vorgesehen, das auf Kalibrieraufnahmen beruht, die während der Vermessung unterschiedlicher Proben aufgenommen wurden. Innerhalb von einzelnen Zeitslots t0, t1, t2 usw. der jeweiligen Messung erfolgt keine weitere Aufschlüsselung der Zeit t, die nach rechts aufgetragen ist. Die Ebenen von Messaufnahmen M, Kalibrieraufnahmen K und Monitoraufnahmen MN sind jeweils übereinander (nach oben) aufgetragen.

Die **Fig. 8a** zeigt eine Variante, bei der im Rahmen der Messung mehrere Messproben P1, P2 nacheinander vermessen werden; beispielhaft ist die Vermessung von zwei Messproben dargestellt. Es erfolgt je Messprobe P1, P2 in einem jeweils zugehörigen Zeitslot t1, t2 zeitgleich wenigstens eine Messaufnahme $IN_{pr}$ und

wenigstens eine Kalibrieraufnahme $IN_{zus}$ als wenigstens eine gemeinsame Aufnahme. Der im jeweiligen Zeitslot t1, t2 bestimmte Kalibrierfaktor S wird auf die wenigstens eine Messaufnahme $IN_{pr}$ desselben Zeitslots t1, t2 angewandt, um das korrigierte Spektrum $KS_{pr}$ zu erhalten.

In dieser Variante wird die bestmögliche Aktualität des Kalibrierfaktors S für die jeweilige Messprobe P1, P2 erreicht.

Die **Fig. 8b** zeigt eine Variante, bei der in einem zeitlich ersten Zeitslot t0 wenigstens eine Kalibrieraufnahme $IN_{zus}$ erfolgt, mit der über das Zusatz-Spektrum $SP_{zus}$ der Kalibrierfaktor S bestimmt wird. In einem zeitlich nächsten Zeitslot t1 wird dann wenigstens eine Messaufnahme $IN_{pr}$ an einer ersten Messprobe P1 durchgeführt, und das zugehörige korrigierte Spektrum $KS_{pr}$ der ersten Messprobe P1 wird mit dem Kalibrierfaktor S aus dem Zeitslot t0 erzeugt. Zeitgleich zur wenigstens einen Messaufnahme $IN_{pr}$ an der ersten Messprobe P1 findet im Zeitslot t1 bereits wenigstens eine weitere Kalibrieraufnahme $IN_{zus}$ statt (gemeinsame Aufnahme), und der daraus bestimmte Kalibrierfaktor S kann dann im nächsten Zeitslot t2 für die in diesem Zeitslot t2 vermessene Messprobe P2 angewandt werden. In entsprechender Weise kann eine beliebige Zahl von Messproben vermessen werden.

Bei dieser Variante können gemeinsame Aufnahmen (also zeitgleiche Messaufnahmen und Kalibrieraufnahmen) angewandt werden, wobei in einem einzelnen Zeitslot (im Beispiel t1) zur Erzeugung des korrigierten Spektrums $KS_{pr}$ der Messprobe nicht die Berechnung des Kalibrierfaktors S des aktuellen Zeitslots (t1) abgewartet zu werden braucht, sondern der (fast genauso aktuelle und damit fast genauso genaue) Kalibrierfaktor S des vorhergehenden Zeitslots (t0) genutzt werden kann.

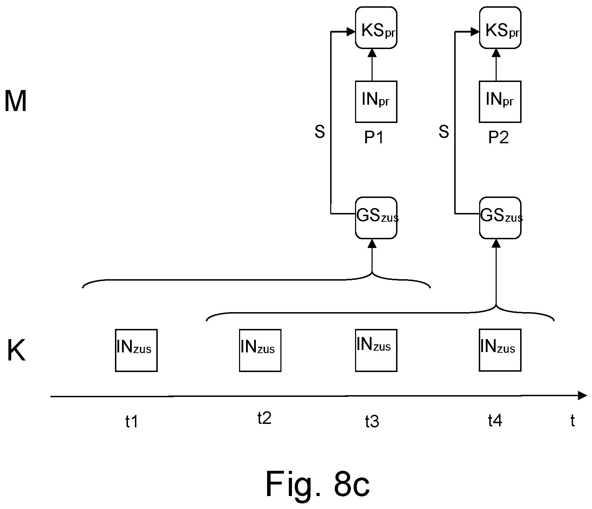

In der Variante von **Fig. 8c** sind beispielhaft vier Zeitslots t1, t2, t3, t4 der Messung dargestellt. Während eines jeden Zeitslots findet jeweils wenigstens eine Messaufnahme $IN_{pr}$ an einer Messprobe statt (dargestellt zur Vereinfachung hier nur für die Zeitslots t3 und t4); beispielsweise wird in Zeitslot t3 wenigstens eine Messaufnahme $IN_{pr}$ der Probe P1 durchgeführt. Der zur Erzeugung des zugehörigen korrigierten Spektrums KSpr angewandte Korrekturfaktor S beruht auf einem gemittelten Zusatz-Spektrum $GS_{zus}$, das auf den Kalibrieraufnahmen $IN_{zus}$ aus den letzten drei Zeitslots t1, t2 und t3 beruht. In den Zeitslots t1 und t2 wurde jeweils wenigstens eine Messaufnahme an einer anderen Probe zeitglich mit den Kalibrieraufnahmen $IN_{zus}$ durchgeführt (nicht näher dargestellt). Auch in dieser Variante finden also die Messaufnahmen $IN_{pr}$ und die Kalibrieraufnahmen $IN_{zus}$ als gemeinsame Aufnahmen statt.

Für die Bestimmung des nächsten Kalibrierfaktors S für die Probe P2 im nächsten Zeitslot t4 werden dann die Kalibrieraufnahmen $IN_{zus}$ aus den Zeitslots t2, t3 und t4 herangezogen.

Der Kalibrierfaktor S beruht in dieser Variante auf einem gleitenden Durchschnitt der Kalibriermessungen $IN_{zus}$ von mehreren (hier drei) letzten Zeitslots bzw. zugehörigen vermessenen Messproben. Dadurch kann der Kalibrierfaktor S mit (durch die Mittelung) größerer Zuverlässigkeit bzw. Genauigkeit bestimmt werden, und dennoch (durch das zeitliche Gleiten) aktuell gehalten werden.

Man beachte, dass alternativ der über eine Anzahl von Zeitslots (z.B. t1, t2, t3) bestimmte Kalibrierfaktor S erst bei einem jeweils nächsten Zeitslot (im Beispiel t4) angewandt werden kann, um die Berechnung des korrigierten Spektrums $KS_{pr}$ der Messprobe zu beschleunigen (nicht näher dargestellt, vgl. aber Fig. 8b in analoger Weise hierzu).

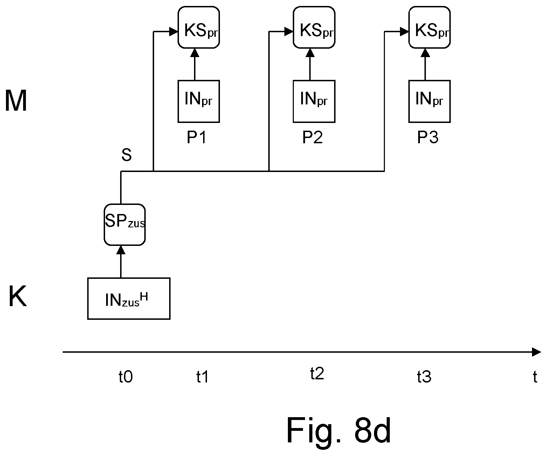

In der in **Fig. 8d** gezeigten Variante erfolgt im Zeitslot t0 wenigstens eine Kalibrieraufnahme $IN_{zus}^H$ mit einer erhöhten Auflösung, verglichen mit der Auflösung der jeweils wenigstens einen Messaufnahme $IN_{pr}$ in den Zeitslots t1, t2, t3 für die Messproben P1, P2, P3. Zur Veranschaulichung ist daher die Kalibrieraufnahme $IN_{zus}^H$ mit einem hohen Index H versehen und in einem Rechteck dargestellt, das doppelt so breit ist wie die Quadrate der Messaufnahmen $IN_{pr}$. Aus der wenigstens einen Kalibrieraufnahme $IN_{zus}^H$ mit erhöhter Auflösung wird ein Zusatz-Spektrum bestimmt, mit dem der Kalibrierfaktor S bestimmt wird, der in mehreren, nachfolgenden Zeitslots, hier den Zeitslots t1, t2, t3, eingesetzt wird, um die korrigierten Spektren $KS_{pr}$ mehrerer Messproben, hier der Messproben P1, P2, P3, zu erzeugen. Der probenübergreifend angewandte Kalibrierfaktor S ist aufgrund der höheren Messauflösung der zugrundeliegenden wenigstens einen Kalibrieraufnahme $IN_{zus}^H$ besonders genau.

Im einfachsten Fall ist in dieser Variante der Kalibrierfaktor S für eine bestimmte Anzahl von nachfolgenden Zeitslots bzw. Messproben gültig (z.B. drei) oder für eine bestimmte zeitdauer (z.B. 10 Minuten), bevor eine erneute, wenigstens eine Kalibrieraufnahme $IN_{zus}^H$ mit einer erhöhten Auflösung erfolgt, um den Kalibrierfaktor S zu aktualisieren.

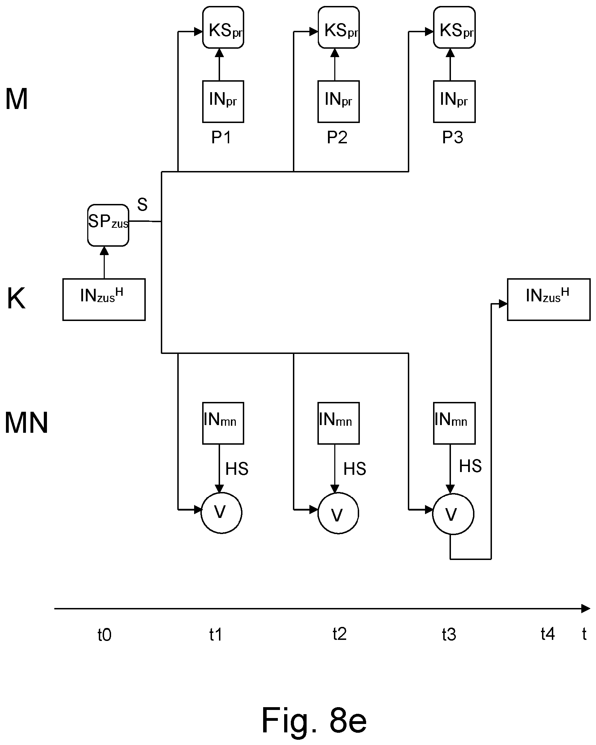

In der Variante von **Fig. 8e,** die auf der Variante von Fig. 8d aufbaut (siehe oben), wird die Gültigkeit des Kalibrierfaktors S, der im Zeitslot t0 auf Basis der wenigstens einen Kalibrieraufnahme $IN_{zus}^H$ mit erhöhter Auflösung bestimmt wurde, mittels Monitoraufnahmen $IN_{mn}$ überprüft. In nachfolgenden Zeitslot t1, t2, t3 wird jeweils wenigstens eine Monitoraufnahme $IN_{mn}$ mit dem Zusatz-Detektor durchgeführt, typischerweise mit derselben Auflösung wie die Messaufnahmen $IN_{pr}$ der Messproben. Dadurch wird jeweils ein Monitor-Zusatz-Spektrum der Kalibriersubstanz erhalten (nicht näher dargestellt), auf Basis dessen (wie bei Kalibrieraufnahmen) ein Kalibrierfaktor bestimmt wird, der im Rahmen der Monitoraufnahmen als Hilfs-Kalibrierfaktor HS bezeichnet wird.

Die Bestimmung der Hilfs-Kalibrierfaktoren HS hat eine geringere Genauigkeit als die Bestimmung des Kalibrierfaktors S; dennoch kann anhand eines Vergleichs V von HS und S erkannt werden, ob der zuletzt bestimmte Kalibrierfaktor S noch brauchbar ist und gültig bleiben sollte. Beispielsweise kann definiert sein, dass der Kalibrierfaktor S als zukünftig als nicht mehr brauchbar gilt, sobald ein Hilfskalibrierfaktor HS um mehr als einen Grenzwert von 0,01% vom Kalibrierfaktor S abweicht.

In gezeigten Beispiel wird im Zeitslot t3 festgestellt, dass der Kalibrierfaktor S nicht mehr brauchbar ist. In der dargestellten Variante wird für die Probe P3 letztmals der Kalibrierfaktor S aus Zeitslot t0 angewandt, und dann in Zeitslot t4 wird eine weitere, wenigstens eine Kalibrieraufnahme $IN_{zus}^{H}$ erhöhter Auflösung begonnen, mit der ein neuer Kalibrierfaktor für nachfolgende Zeitslots bestimmt wird (letztere nicht näher dargestellt). Alternativ wäre es zum Beispiel auch möglich, im Zeitslot t3 den dort ermittelten Hilfskalibrierfaktor HS für die Erzeugung des kalibrierten Spektrums $KS_{pr}$ von Messprobe P3 anzuwenden.

Man beachte, dass typischerweise Zeitslots für Kalibrieraufnahmen mit erhöhter Auflösung (t0 in Fig. 8d, und t0, t4 in Fig. 8e) zeitlich länger dauern als Zeitslots für Monitoraufnahmen (t1, t2, t3 in Fig. 8d, 8e). Man beachte weiterhin, dass zeitgleich zu den Kalibrieraufnahmen $IN_{zus}^{H}$ auch Messaufnahmen $IN_{pr}$ an Messproben stattfinden können, falls gewünscht (gemeinsame Aufnahmen) (nicht näher dargestellt).

Bezugszeichenliste

| | |
|---|---|
| 1 | FT-Spektrometer-Anordnung |
| 2 | Lichtquelle |
| 3 | Licht |
| 4 | kollimierender Spiegel |
| 5 | Interferometer |
| 6 | Strahlteiler |
| 7 | Reflektor |
| 7a | Retro-Reflektor |
| 8 | Reflektor |
| 8a | Retro-Reflektor |
| 9 | (erster) Interferometerarm |
| 10 | (zweiter) Interferometerarm |
| 11 | Vorrichtung zur Veränderung des optischen Gangunterschieds |
| 12 | Messposition |
| 12a | Messprobe |
| 13 | Detektor |
| 14 | Zusatz-Detektor |
| 14a | Fokussierlinse |
| 15 | erste Blende |
| 16 | zweite Blende |
| 17 | Teilstrahl (im Strahlengang hinter dem Interferometer zum Zusatz-Detektor) |
| 18 | Teilstrahl (im Strahlengang hinter dem Interferometer zur Messposition) |
| 19 | Behälter |
| 19a | Kalibriersubstanz |
| 20 | fokussierender Spiegel |
| 21 | abbildender Spiegel |
| 22 | Referenz-Laser |
| 23 | Referenz-Licht |
| 24 | Spiegel |
| 25 | Spiegel |
| 26 | Referenz-Detektor |
| 27 | optische Achse des Interferometerarms 9 |
| A | Messsignal (Detektor oder Zusatz-Detektor) |
| $A_{ref}$ | Messsignal (Referenzdetektor) |
| f | Funktion der Referenz-Spektrum |
| $F_{eff}$ | effektive Laserfrequenz |
| $F_{no}$ | nominale Laserfrequenz |
| g | Funktion der Zusatz-Spektrum |
| H | Index hohe Auflösung |
| HS | Hilfs-Kalibrierfaktor |
| I | Intensität |
| IN | Interferogramme/Signal repräsentierend Aufnahmen gemäß Index |
| K | Bereich Kalibrieraufnahmen |
| KS | korrigiertes Spektrum gemäß Index |
| K1 | Integral der Kreuzkorrelation |
| M | Bereich Messaufnahmen |
| mn | Index Monitoraufnahmen |
| MN | Bereich Monitoraufnahmen |
| pr | Index Messproben/Spektrum |
| $P_{ref}$ | Wellenzahl-Position (Peak) im Referenz-Spektrum |
| $P_{zus}$ | Wellenzahl-Position (Peak) im Zusatz-Spektrum |
| P1,P2,P3... | Proben |
| S | (aktueller) Kalibrierfaktor |
| $S_{alt}$ | bisheriger Kalibrierfaktor |
| SP | Spektrum gemäß Index |
| t0,t1,t2... | Zeitslots |
| t | Zeit |
| UF | Update-Faktor |
| US | unkorrigiertes Spektrum gemäß Index |
| V | Vergleich (HS und S) |
| VS | vorkorrigiertes Spektrum gemäß Index |
| zus | Index Kalibriersubstanz/Zusatz-Spektrum |
| $\delta$ | Integrationsweite |
| $\sigma$ | Wellenzahl |
| $\sigma_0$ | mittlere Wellenzahl-Position |
| $\tau$ | Wellenzahlverschiebungsvariable |
| $\tau0$ | Wellenzahlverschiebungsvariable am Maximum von K1 |

**Patentansprüche**

1.  FT-Spektrometer-Anordnung (1), umfassend

- eine Lichtquelle (2) für Licht (3),
- ein Interferometer (5) mit wenigstens einem Strahlteiler (6) und zwei Interferometerarmen (9, 10), durch das das Licht (3) der Lichtquelle (2) geleitet wird, wobei die Interferometerarme (9, 10) jeweils einen Reflektor (7, 8) aufweisen,
- eine Messprobe (12a) an einer Messposition (12),
- einen Detektor (13) für das Licht (3), wobei die Messposition (12) im Strahlengang des Lichts (3) zwischen dem Interferometer (5) und dem Detektor (13) angeordnet ist,
- einer Vorrichtung (11) zur Veränderung eines optischen Gangunterschieds (GU) zwischen den zwei Interferometerarmen (9, 10), insbesondere zum Verfahren eines oder beider der Reflektoren (7, 8),
- einem Referenz-Laser (22), mit dem Referenz-Laserlicht (23) durch das Interferometer (5) geleitet wird,
- wenigstens einen Referenz-Detektor (26) zum Vermessen des Referenz-Laserlichts (23), wobei der Referenz-Detektor (26) im Strahlengang des Referenz-Laserlichts (23) hinter dem Interferometer (5) angeordnet ist, und

- einen Zusatz-Detektor (14), mit welchem ein Teilstrahl (17) des Lichts (3) vermessbar ist, welcher das Interferometer (5) passiert hat, nicht aber die Messposition (12) passiert hat, wobei mit dem Detektor (13) ein weiterer Teilstrahl (18) des Lichts (3), welcher das Interferometer (5) passiert hat und die Messposition (12) passiert hat, zeitgleich mit einer Vermessung des Teilstrahls (17) am Zusatz-Detektor (14) vermessbar ist,

**dadurch gekennzeichnet,**

**dass** die Reflektoren (7, 8) als Retro-Reflektoren (7a, 8a) ausgebildet sind,
**dass** eine erste Blende (15) im Strahlengang des Lichts (3) zwischen der Lichtquelle (2) und dem Interferometer (5), mit der ein Teil, insbesondere eine Hälfte, des Lichts (3) abgeschattet wird, angeordnet ist, und
**dass** der Teilstrahl (17) des Lichts (3), welcher mit dem Zusatz-Detektor (14) vermessbar ist, ausgehend vom Strahlteiler (6) in Richtung zur Lichtquelle (2) auf die erste Blende (15) zurück gerichtet ist.

2. FT-Spektrometer-Anordnung (1) nach Anspruch 1, **dadurch gekennzeichnet,** **dass** weiterhin eine zweite Blende (16) im Strahlengang des Lichts (3) zwischen dem Interferometer (5) und der Messposition (12), mit der ein Teil, insbesondere eine Hälfte, des Lichts (3) abgeschattet wird, vorgesehen ist, und dass der Teilstrahl (17) des Lichts (3), welcher mit dem Zusatz-Detektor (14) vermessbar ist, ausgehend vom Strahlteiler (6) in Richtung zur Probenposition (12) hin auf die zweite Blende (16) zu gerichtet ist.

3. FT-Spektrometer-Anordnung (1) nach Anspruch 1 oder 2, **dadurch gekennzeichnet, dass** in dem Teilstrahl (14) des Lichts (3), welcher mit dem Zusatz-Detektor (14) vermessbar ist, zwischen dem Interferometer (5) und dem Zusatz-Detektor (14) eine Fokussierlinse (14a) oder ein Fokussierspiegel angeordnet ist.

4. FT-Spektrometer-Anordnung (1) nach einem der Ansprüche 1 bis 3,
**dadurch gekennzeichnet, dass** in dem Teilstrahl (17) des Lichts (3), welcher mit dem Zusatz-Detektor (14) vermessbar ist, zwischen dem Interferometer (5) und dem Zusatz-Detektor (14) ein Behälter (19) mit einer Kalibriersubstanz (19a) angeordnet ist.

5. FT-Spektrometer-Anordnung (1) nach Anspruch 4, **dadurch gekennzeichnet, dass** die Kalibiersubstanz (19a) ein Kalibriergas, bevorzugt Wasserdampf oder Methan oder Acetylen, ist.

6. Verfahren zur Messung eines Spektrums $(KS_{pr})$ einer Messprobe (12a) mittels einer FT-Spektrometer-Anordnung (1) nach einem der vorhergehenden Ansprüche,

wobei die Messung eine oder mehrere Messaufnahmen $(IN_{pr})$ umfasst,
wobei in einer jeweiligen Messaufnahme $(IN_{pr})$

- Licht (3) aus einer Lichtquelle (3) durch ein Interferometer (5) geleitet wird, an einer Messposition (12) hinter dem Interferometer (5) mit der Messprobe (12a) wechselwirkt und an einem Detektor (13) vermessen wird,
- weiterhin Referenz-Laserlicht (23) aus einem Referenz-Laser (22), insbesondere einer Laserdiode, durch das Interferometer (5) geleitet wird und an wenigstens einem Referenz-Detektor (26) vermessen wird,
- wobei unter anderem ein Signal des Detektors (13) der einen oder der mehreren Messaufnahmen $(IN_{pr})$ und ein Kalibrierfaktor (S) zur Kalibrierung einer Frequenzachse genutzt werden, um ein Spektrum $(KS_{pr})$ der Messprobe (12) zu erzeugen,

wobei die Messung eine oder mehrere Kalibrieraufnahmen $(IN_{zus})$ umfasst, wobei in einer jeweiligen Kalibrieraufnahme $(IN_{zus})$

- Licht (3) aus der Lichtquelle (2) durch das Interferometer (5) geleitet wird, und aus dem Strahlengang des Lichts (3) ein Teilstrahl (17) des Lichts (3) nach dem Passieren des Interferometers (5) ohne Passieren der Messposition (12) an einem Zusatz-Detektor (14) vermessen wird,
- weiterhin Referenz-Laserlicht (23) aus dem Referenz-Laser (22) durch das Interferometer (5) geleitet wird und an dem wenigstens einen Referenz-Detektor (26) vermessen wird,

wobei unter anderem ein Signal des Zusatz-Detektors (14) der einen oder der mehreren Kalibrieraufnahmen ($IN_{zus}$) dazu genutzt wird, um ein Zusatz-Spektrum ($SP_{zus}$) zu erzeugen, und wobei ein Referenz-Spektrum ($SP_{ref}$) oder eine Teilinformation daraus einer Kalibriersubstanz (19a), insbesondere eines Kalibriergases, welche im Strahlengang des Lichts (3) zwischen der Lichtquelle (2) und dem Zusatz-Detektor (14) enthalten ist, mit dem Zusatz-Spektrum ($SP_{zus}$) oder einer Teilinformation daraus verglichen wird, um den Kalibrierfaktor (S) zu ermitteln.

7. Verfahren nach Anspruch 6, **dadurch gekennzeichnet, dass** ein oder mehrere der Messaufnahmen ($IN_{pr}$) und ein oder mehrere der Kalibrieraufnahmen ($IN_{zus}$) als ein oder mehrere gemeinsame Aufnahmen zeitgleich durchgeführt werden.

8. Verfahren nach Anspruch 7, **dadurch gekennzeichnet, dass** alle Messaufnahmen ($IN_{pr}$) und Kalibrieraufnahmen ($IN_{zus}$) als gemeinsame Aufnahmen durchgeführt werden.

9. Verfahren nach Anspruch 7 oder 8, **dadurch gekennzeichnet, dass** das kalibrierte Spektrum ($KS_{pr}$) der Messprobe (12) und der Kalibrierfaktor (S), der bei der Erzeugung des kalibrierten Spektrums ($KS_{pr}$) angewandt wird, auf einer oder mehreren gemeinsamen Aufnahmen basieren.

10. Verfahren nach einem der Ansprüche 6 bis 8, **dadurch gekennzeichnet, dass** der Kalibrierfaktor (S), der bei der Erzeugung des kalibrierten Spektrums ($KS_{pr}$) der Messprobe (12) angewandt wird, auf einer oder mehreren Kalibrieraufnahmen ($IN_{zus}$) basiert, die zeitlich vor der einen oder den mehreren Messaufnahmen ($IN_{pr}$) aufgenommen wurden, auf denen das kalibrierte Spektrum ($KS_{pr}$) basiert.

11. Verfahren nach einem der Ansprüche 6 bis 10, **dadurch gekennzeichnet, dass** im Rahmen des Verfahrens eine Messung von mehreren Spektren ($KS_{pr}$) an mehreren Messproben (12; P1, P2, P3) erfolgt,

wobei jeweils ein kalibriertes Spektrum ($KS_{pr}$) der jeweiligen Messprobe (12; P1, P2, P3) erzeugt wird.

12. Verfahren nach Anspruch 11, **dadurch gekennzeichnet, dass** für jedes kalibrierte Spektrum ($KS_{pr}$) der mehreren Messproben (12; P1, P2, P3) ein eigener Kalibrierfaktor (S) ermittelt wird, mit welchem das kalibrierte Spektrum ($KS_{pr}$) einer jeweiligen Messprobe (12; P1, P2, P3) erzeugt wird.

13. Verfahren nach Anspruch 12 in Verbindung mit Anspruch 7, **dadurch gekennzeichnet, dass** der jeweilige eigene Kalibrierfaktor (S) und das jeweilige kalibrierte Spektrum ($KS_{pr}$) der jeweiligen Messprobe (12; P1, P2, P3) auf gemeinsamen Aufnahmen basieren.

14. Verfahren nach Anspruch 11, **dadurch gekennzeichnet, dass** ein probenübergreifender Kalibrierfaktor (S), der auf Basis einer oder mehrerer Kalibrieraufnahmen ($IN_{zus}$) ermittelt wird, für die Erzeugung mehrerer kalibrierter Spektren ($KS_{pr}$) von mehreren Messproben (12; P1, P2, P3) angewandt wird.

15. Verfahren nach Anspruch 14, **dadurch gekennzeichnet, dass** der probenübergreifende Kalibrierfaktor (S) auf Basis einer oder mehrerer Kalibrieraufnahmen ($IN_{zus}^{H}$) ermittelt wird, die eine höhere spektrale Auflösung aufweisen als zumindest ein Teil der Messaufnahmen ($IN_{pr}$), auf denen die mehreren kalibrierten Spektren ($KS_{pr}$) der mehreren Messproben (12; P1, P2, P3) basieren.

16. Verfahren nach einem der Ansprüche 6 bis 15, **dadurch gekennzeichnet, dass** ein Behälter (19) enthaltend Kalibriersubstanz (19a) in den Strahlengang des Lichts (3) zwischen dem Interferometer (5) und dem Zusatz-Detektor (14) angeordnet wird.

17. Verfahren nach einem der Ansprüche 6 bis 16, **dadurch gekennzeichnet, dass** als Kalibriersubstanz (19a) eine in der FT-Spektrometer-Anordnung (1) omnipräsente Substanz gewählt ist.

18. Verfahren nach einem der Ansprüche 6 bis 17, **dadurch gekennzeichnet, dass** die Kalibriersubstanz (19a) Wasserdampf oder Methan oder Acetylen ist.

19. Verfahren nach einem der Ansprüche 6 bis 18, **dadurch gekennzeichnet, dass** die Ermittlung des Kalibrierfaktors (S) und die Erzeugung des kalibrierten Spektrums ($KS_{pr}$) durch eine Auswerteeinheit der FT-Spektrometer-Anordnung (1) in situ erfolgt.

**Claims**

1. FT spectrometer arrangement (1), comprising

- a light source (2) for light (3),
- an interferometer (5) with at least one beam splitter (6) and two interferometer arms (9, 10), through which the light (3) from the light source (2) is guided, wherein the interferometer arms (9, 10) each comprise one reflector (7, 8),
- a measurement sample (12a) at a measurement position (12),
- a detector (13) for the light (3), wherein the measurement position (12) is arranged in the beam path of the light (3) between the interferometer (5) and the detector (13),
- a device (11) for changing an optical path difference (GU) between the two interferometer arms (9, 10), in particular for moving one or both of the reflectors (7, 8),
- a reference laser (22) with which reference laser light (23) is guided through the interferometer (5),
- at least one reference detector (26) for measuring the reference laser light (23), wherein the reference detector (26) is arranged in the beam path of the reference laser light (23) downstream of the interferometer (5), and
- an additional detector (14) with which a partial beam (17) of the light (3), which has passed through the interferometer (5) but has not passed through the measurement position (12), can be measured,

wherein the detector (13) can measure a further partial beam (18) of the light (3), which has passed through the interferometer (5) and has passed through the measurement position (12), simultaneously with a measurement of the partial beam (17) at the additional detector (14), **characterized in that** the reflectors (7, 8) are designed as retro-reflectors (7a, 8a), **that** a first aperture (15) is arranged in the beam path of the light (3) between the light source (2) and the interferometer (5), with which a portion, in particular one half, of the light (3) is shaded, and **that** the partial beam (17) of the light (3), which can be measured with the additional detector (14), originating from the beam splitter (6) is directed back towards the light source (2) onto the first aperture (15).

2. FT spectrometer arrangement (1) according to claim 1, **characterized in that** a second aperture (16) is furthermore provided in the beam path of the light (3) between the interferometer (5) and the measurement position (12), with which a part, in particular one half, of the light (3) is shaded, and that the partial beam (17) of the light (3), which can be measured with the additional detector (14), originating from the beam splitter (6) is directed towards the sample position (12) onto the second aperture (16).

3. FT spectrometer arrangement (1) according to claim 1 or 2, **characterized in that** in the partial beam (14) of the light (3), which can be measured by the additional detector (14), a focusing lens (14a) or a focusing mirror is arranged between the interferometer (5) and the additional detector (14).

4. FT spectrometer arrangement (1) according to one of claims 1 to 3, **characterized in that** in the partial beam (17) of the light (3), which can be measured with the additional detector (14), a container (19) with a calibration substance (19a) is arranged between the interferometer (5) and the additional detector (14).

5. FT spectrometer arrangement (1) according to claim 4, **characterized in that** the calibration substance (19a) is a calibration gas, preferably water vapor or methane or acetylene.

6. Method for measuring a spectrum $(KS_{pr})$ of a measurement sample (12a) using an FT spectrometer arrangement (1) according to one of the preceding claims,

wherein the measurement comprises one or more measurement recordings $(IN_{pr})$, wherein in a respective measurement recording $(IN_{pr})$

- light (3) from a light source (3) is guided through an interferometer (5), interacts with the measurement sample (12a) at a measurement position (12) downstream of the interferometer (5) and is measured at a detector (13),
- furthermore, reference laser light (23) from a reference laser (22), in particular a laser diode, is guided through the interferometer (5) and is measured at at least one reference detector (26),
- wherein, among other things, a signal from the detector (13) of the one or the plurality of measurement recordings $(IN_{pr})$ and a calibration factor (S) for calibrating a frequency axis are used to generate a spectrum $(KS_{pr})$ of the measurement sample (12),

wherein the measurement comprises one or a plurality of calibration recordings $(IN_{zus})$, wherein in a respective calibration recording $(IN_{zus})$

- light (3) from the light source (2) is guided through the interferometer (5),

and a partial beam (17) of the light (3) from the beam path of the light (3) is measured at an additional detector (14) after passing through the interferometer (5) without passing through the measurement position (12),

- furthermore, reference laser light (23) from the reference laser (22) is guided through the interferometer (5) and is measured at the at least one reference detector (26),

wherein, among other things, a signal from the additional detector (14) of the one or the plurality of calibration recordings ($IN_{zus}$) is used to generate an additional spectrum (SPzus), and wherein a reference spectrum ($SP_{ref}$) or partial information therefrom of a calibration substance (19a), in particular a calibration gas, which is contained in the beam path of the light (3) between the light source (2) and the additional detector (14), is compared with the additional spectrum ($SP_{zus}$) or partial information therefrom in order to determine the calibration factor (S).

7. Method according to claim 6, **characterized in that** one or a plurality of the measurement recordings ($IN_{pr}$) and one or a plurality of the calibration recordings ($IN_{zus}$) are performed simultaneously as one or a plurality of joint recordings.

8. Method according to claim 7, **characterized in that** all measurement recordings ($IN_{pr}$) and calibration recordings ($IN_{zus}$) are performed as joint recordings.

9. Method according to claim 7 or 8, **characterized in that** the calibrated spectrum ($KS_{pr}$) of the measurement sample (12) and the calibration factor (S), which is applied in the generation of the calibrated spectrum ($KS_{pr}$), are based on one or a plurality of joint recordings.

10. Method according to one of claims 6 to 8, **characterized in that** the calibration factor (S), which is applied in the generation of the calibrated spectrum ($KS_{pr}$) of the measurement sample (12), is based on one or a plurality of calibration recordings ($IN_{zus}$) that were recorded prior to the one or the plurality of measurement recordings ($IN_{pr}$) on which the calibrated spectrum ($KS_{pr}$) is based.

11. Method according to one of claims 6 to 10, **characterized in that**, as part of the method, a measurement of several spectra ($KS_{pr}$) is performed on a plurality of measurement samples (12; P1, P2, P3), wherein a calibrated spectrum ($KS_{pr}$) of each respective measurement sample (12; P1, P2, P3) is generated.

12. Method according to claim 11, **characterized in that** for each calibrated spectrum ($KS_{pr}$) of the plurality of measurement samples (12; P1, P2, P3), a separate calibration factor (S) is determined with which the calibrated spectrum ($KS_{pr}$) of a respective measurement sample (12; P1, P2, P3) is generated.

13. Method according to claim 12 in conjunction with claim 7, **characterized in that** the respective separate calibration factor (S) and the respective calibrated spectrum ($KS_{pr}$) of the respective measurement sample (12; P1, P2, P3) are based on joint recordings.

14. Method according to claim 11, **characterized in that** a cross-sample calibration factor (S), which is determined on the basis of one or a plurality of calibration recordings ($IN_{zus}$), is used to generate a plurality of calibrated spectra ($KS_{pr}$) of a plurality of measurement samples (12; P1, P2, P3).

15. Method according to claim 14, **characterized in that** the cross-sample calibration factor (S) is determined on the basis of one or a plurality of calibration recordings ($IN_{zus}^{H}$) which have a higher spectral resolution than at least part of the measurement recordings ($IN_{pr}$) on which the plurality of calibrated spectra ($KS_{pr}$) of the plurality of measurement samples (12; P1, P2, P3) are based.

16. Method according to one of claims 6 to 15, **characterized in that** a container (19) containing calibration substance (19a) is arranged in the beam path of the light (3) between the interferometer (5) and the additional detector (14).

17. Method according to one of claims 6 to 16, **characterized in that** a substance omnipresent in the FT spectrometer arrangement (1) is selected as the calibration substance (19a).

18. Method according to one of claims 6 to 17, **characterized in that** the calibration substance (19a) is water vapor or methane or acetylene.

19. Method according to one of claims 6 to 18, **characterized in that** the determination of the calibration factor (S) and the generation of the calibrated spectrum ($KS_{pr}$) are performed in situ by an evaluation unit of the FT spectrometer arrangement (1).

**Revendications**

1. Ensemble formant spectromètre à transformée de Fourier (FT) (1), comprenant

- une source de lumière (2) fournissant de la lumière (3),

- un interféromètre (5) comprenant au moins un diviseur de faisceau (6) et deux bras d'interféromètre (9, 10) et à travers lequel passe la lumière (3) de la source de lumière (2), les bras d'interféromètre (9, 10) présentant respectivement un réflecteur (7, 8),

- un échantillon de mesure (12a) au niveau d'une position de mesure (12),

- un détecteur (13) pour la lumière (3), la position de mesure (12) étant agencée entre l'interféromètre (5) et le détecteur (13) sur le trajet optique de la lumière (3),

- un dispositif (11) permettant de modifier une différence de pas optique (GU) entre les deux bras d'interféromètre (9, 10), en particulier permettant de déplacer un ou deux des réflecteurs (7, 8),

- un laser de référence (22) grâce auquel il est possible de faire passer de la lumière laser de référence (23) à travers l'interféromètre (5),

- au moins un détecteur de référence (26) permettant de mesurer la lumière laser de référence (23), le détecteur de référence (26) étant agencé en aval de l'interféromètre (5) sur le trajet optique de la lumière laser de référence (23), et

- un détecteur supplémentaire (14) grâce auquel un sous-faisceau (17) de la lumière (3) qui est passé par l'interféromètre (5) mais qui n'est pas passé par la position de mesure (12) peut être mesuré,

un autre sous-faisceau (18) de la lumière (3) qui est passé par l'interféromètre (5) et qui est passé par la position de mesure (12) pouvant être mesuré grâce au détecteur (13) en même temps qu'une mesure du sous-faisceau (17) au niveau du détecteur supplémentaire (14),
**caractérisé en ce que**
les réflecteurs (7, 8) sont réalisés sous la forme de rétroréflecteurs (7a, 8a),
un premier diaphragme (15), grâce auquel une partie, en particulier une moitié, de la lumière (3) est occultée, est agencé sur le trajet optique de la lumière (3) entre la source de lumière (2) et l'interféromètre (5), et le sous-faisceau (17) de la lumière (3) qui peut être mesuré avec le détecteur supplémentaire (14) est redirigé sur le premier diaphragme (15) à partir du diviseur de faisceau (6) en direction de la source de lumière (2).

2. Ensemble formant spectromètre FT (1) selon la revendication 1, **caractérisé en ce que** un deuxième diaphragme (16), grâce auquel une partie, en particulier une moitié, de la lumière (3) est occultée, est en outre fourni sur le trajet optique de la lumière (3) entre l'interféromètre (5) et la position de mesure (12) et **en ce que** le sous-faisceau (17) de la lumière (3) qui peut être mesuré avec le détecteur supplémentaire (14) est dirigé sur le deuxième diaphragme (16) à partir du diviseur de faisceau (6) en direction de la position d'échantillon (12).

3. Ensemble formant spectromètre FT (1) selon la revendication 1 ou 2, **caractérisé en ce qu'**une lentille de focalisation (14a) ou un miroir de focalisation est agencé(e) entre l'interféromètre (5) et le détecteur supplémentaire (14) dans le sous-faisceau (14) de la lumière (3) qui peut être mesuré avec le détecteur supplémentaire (14).

4. Ensemble formant spectromètre FT (1) selon l'une quelconque des revendications 1 à 3, **caractérisé en ce qu'**un récipient (19) contenant une substance d'étalonnage (19a) est agencé entre l'interféromètre (5) et le détecteur supplémentaire (14) dans le sous-faisceau (17) de la lumière (3) qui peut être mesuré avec le détecteur supplémentaire (14).

5. Ensemble formant spectromètre FT (1) selon la revendication 4, **caractérisé en ce que** la substance d'étalonnage (19a) est un gaz d'étalonnage, de manière préférée de la vapeur d'eau ou du méthane ou de l'acétylène.

6. Procédé de mesure d'un spectre (KSpr) d'un échantillon de mesure (12a) à l'aide d'un ensemble formant spectromètre FT (1) selon l'une quelconque des revendications précédentes,

la mesure comprenant un ou plusieurs enregistrement(s) de mesure ($IN_{pr}$),
pour le(s)quel(s), dans un enregistrement de mesure ($IN_{pr}$) respectif,

- de la lumière (3) provenant d'une source de lumière (3) passe à travers un interféromètre (5), interagit avec l'échantillon de mesure (12a) au niveau d'une position de mesure (12) en aval de l'interféromètre (5) et est mesurée au niveau d'un détecteur (13),
- de la lumière laser de référence (23) provenant d'un laser de référence (22), en particulier d'une diode laser, passe en outre à travers l'interféromètre (5) et est mesurée au niveau d'au moins un détecteur de référence (26),
- un signal du détecteur (13) du ou des enregistrement(s) de mesure ($IN_{pr}$) et un facteur d'étalonnage (S) sont entre autres utilisés pour étalonner un axe de fréquence afin de générer un spectre ($KS_{pr}$) de l'échantillon de mesure (12),

la mesure comprenant un ou plusieurs enregistrement(s) d'étalonnage ($IN_{zus}$), pour le(s)quel(s), dans un enregistrement d'étalonnage ($IN_{ZUS}$) respectif,

- de la lumière (3) provenant de la source de lumière (2) passe à travers l'interféromètre (5) et, à partir du trajet optique de la lumière (3), un sous-faisceau (17) de la lumière (3) est mesuré au niveau d'un détecteur supplémentaire (14) après le passage par l'interféromètre (5) sans le passage par la position de mesure (12),
- de la lumière laser de référence (23) provenant du laser de référence (22) passe en outre à travers l'interféromètre (5) et est mesurée au niveau du au moins un détecteur de référence (26) ,

un signal du détecteur supplémentaire (14) du ou des enregistrement(s) d'étalonnage ($IN_{ZUS}$) étant entre autres utilisé pour générer un spectre supplémentaire ($SP_{ZUS}$),
et un spectre de référence ($SP_{ref}$), ou une information partielle issue de celui-ci, d'une substance d'étalonnage (19a), en particulier d'un gaz d'étalonnage, contenue sur le trajet optique de la lumière (3) entre la source de lumière (2) et le détecteur supplémentaire (14) est comparé au spectre supplémentaire ($SP_{ZUS}$) ou à une information partielle issue de celui-ci afin de déterminer le facteur d'étalonnage (S).

7. Procédé selon la revendication 6, **caractérisé en ce qu'**un ou plusieurs des enregistrements de mesure ($IN_{pr}$) et un ou plusieurs des enregistrements d'étalonnage ($IN_{ZUS}$) sont mis en œuvre simultanément sous la forme d'un ou plusieurs enregistrement(s) commun(s).

8. Procédé selon la revendication 7, **caractérisé en ce que** tous les enregistrements de mesure ($IN_{pr}$) et tous les enregistrements d'étalonnage ($IN_{ZUS}$) sont mis en œuvre sous la forme d'enregistrements communs.

9. Procédé selon la revendication 7 ou 8, **caractérisé en ce que** le spectre étalonné ($KS_{pr}$) de l'échantillon de mesure (12) et le facteur d'étalonnage (S) qui est utilisé pour générer le spectre étalonné ($KS_{pr}$) sont basés sur un ou plusieurs enregistrement(s) commun(s).

10. Procédé selon l'une quelconque des revendications 6 à 8, **caractérisé en ce que** le facteur d'étalonnage (S) utilisé pour générer le spectre étalonné ($KS_{pr}$) de l'échantillon de mesure (12) est basé sur un ou plusieurs enregistrement(s) d'étalonnage ($IN_{ZUS}$) enregistré(s) chronologiquement avant le ou les enregistrement(s) de mesure ($IN_{pr}$) sur le(s)quel(s) est basé le spectre étalonné ($KS_{pr}$).

11. Procédé selon l'une quelconque des revendications 6 à 10, **caractérisé en ce que**, dans le cadre du procédé, une mesure de plusieurs spectres ($KS_{pr}$) intervient sur plusieurs échantillons de mesure (12 ; P1, P2, P3),
un spectre étalonné ($KS_{pr}$) de l'échantillon de mesure (12 ; P1, P2, P3) respectif étant respectivement généré.

12. Procédé selon la revendication 11, **caractérisé en ce qu'**un facteur d'étalonnage (S) propre, grâce auquel le spectre étalonné ($KS_{pr}$) d'un échantillon de mesure respectif est généré, est déterminé pour chaque spectre étalonné ($KS_{pr}$) de la pluralité d'échantillons de mesure (12 ; P1, P2, P3).

13. Procédé selon la revendication 12 en relation avec la revendication 7, **caractérisé en ce que** le facteur d'étalonnage (S) propre respectif et le spectre étalonné ($KS_{pr}$) respectif de l'échantillon de mesure (12 ; P1, P2, P3) respectif se basent sur des enregistrements communs.

14. Procédé selon la revendication 11, **caractérisé en ce qu'**un facteur d'étalonnage (S) interéchantillons déterminé en se basant sur un ou plusieurs enregistrement(s) d'étalonnage ($IN_{ZUS}$) est utilisé pour générer plusieurs spectres étalonnés ($KS_{pr}$) de plusieurs échantillons de mesure (12 ; P1, P2, P3).

15. Procédé selon la revendication 14, **caractérisé en ce que** le facteur d'étalonnage (S) interéchantillons est déterminé en se basant sur un ou plusieurs enregistrement(s) d'étalonnage ($IN_{ZUS}^H$) qui présentent une résolution spectrale plus élevée qu'au moins une partie des enregistrements de mesure ($IN_{pr}$) sur lesquels se basent la pluralité de spectres étalonnés ($KS_{pr}$) de la pluralité d'échantillons de mesure (12 ; P1, P2, P3).

16. Procédé selon l'une quelconque des revendications 6 à 15, **caractérisé en ce qu'**un récipient (19) contenant une substance d'étalonnage (19a) est agencé sur le trajet optique de la lumière (3) entre l'interféromètre (5) et le détecteur supplémentaire (14).

17. Procédé selon l'une quelconque des revendications 6 à 16, **caractérisé en ce qu'**une substance omniprésente dans l'ensemble formant spectromètre FT (1) est choisie comme substance d'étalonnage (19a).

18. Procédé selon l'une quelconque des revendications 6 à 17, **caractérisé en ce que** la substance d'étalonnage (19a) est de la vapeur d'eau ou du méthane ou de l'acétylène.

19. Procédé selon l'une quelconque des revendications 6 à 18, **caractérisé en ce que** la détermination du facteur d'étalonnage (S) et la génération du spectre étalonné ($KS_{pr}$) interviennent situ grâce à une unité d'évaluation de l'ensemble formant spectromètre FT (1).

Fig. 1

Fig. 2

Fig. 3

Fig. 4a

Fig.4b

Fig. 5

Fig. 6

Fig. 7a

Fig. 7b

INpr → KSpr

INzus → USzus ⎫
           ⎬ S
      SPref ⎭

t

Fig. 7c

Fig. 8a

Fig. 8b

Fig. 8c

M

KS$_{pr}$   KS$_{pr}$   KS$_{pr}$

IN$_{pr}$   IN$_{pr}$   IN$_{pr}$

P1   P2   P3

S

SP$_{zus}$

K

IN$_{zus}$$^H$

t0   t1   t2   t3   t

Fig. 8d

Fig. 8e

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2019017930 A1
- DE 102004025448 A1
- DE 102014226487 A1
- US 5309217 A
- US 2003189709 A1

- US 2020217786 A1
- EP 3413021 A1
- US 2019301939 A1
- WO 2011154035 A1
- WO 2005111560 A1